# FASCICULE DE BREVET EUROPEEN

(11) **EP 1 351 883 B1**
(45) Date de publication et mention de la délivrance du brevet: **06.10.2004**
(21) Numéro de dépôt: 02711995.7
(22) Date de dépôt: 17.01.2002
(51) Int. Cl.: C01B 37/00, C01B 37/02, B01J 35/00, B01J 23/10

(54) **CATALYSEUR MESOSTRUCTURE INTEGRANT DES PARTICULES DE DIMENSIONS NANOMETRIQUES**
KATALYSATOR MIT MESOSTRUKTUR ENTHALTEND TEILCHEN IM NANOMETER-BEREICH
MESOSTRUCTURED CATALYST INCORPORATING PARTICLES OF NANOMETRIC DIMENSIONS

(30) Priorité: 18.01.2001 FR 0100698
(43) Date de publication de la demande: 15.10.2003
(73) Titulaire: RHODIA CHIMIE, 92512 Boulogne Billancourt Cedex (FR)
(72) Inventeur: CHANE-CHING, Jean-Yves, F-95600 Eaubonne (FR); NEVEU, Sylvaine, F-75005 Paris (FR); LE GOVIC, Anne-Marie, F-75010 Paris (FR)
(74) Mandataire: Dubruc, Philippe
(86) Numéro de dépôt international: PCT/FR2002/000190
(87) Numéro de publication internationale: WO 2002/057184

(56) Documents cités:
- WO-A-97/43040
- CAI W ET AL: "SYNTHESIS AND LUMINESCENCE OF THE NANOSIZED CE-DOPED SILICA PARTICLES DISPERSED WITHIN THE PORES OF MESOPOROUS SILICA HOST" JOURNAL OF MATERIALS RESEARCH, NEW YORK, NY, US, vol. 14, no. 5, mai 1999 (1999-05), pages 1922-1927, XP000921102 ISSN: 0884-2914
- RELLER A ET AL: "Redox processes in polynary copper oxides and copper oxide/mesoporous silica composites" PROCEEDINGS OF THE 1998 MRS FALL MEETING - SYMPOSIUM ON SOLID-STATE CHEMISTRY OF INORGANIC MATERIALS II;BOSTON, MA, USA NOV 30-DEC 4 1998, vol. 547, 30 novembre 1998 (1998-11-30), pages 75-80, XP001039833 Mater Res Soc Symp Proc;Materials Research Society Symposium - Proceedings 1999 Materials Research Society, Warrendale, PA, USA

## Description

La présente invention concerne des matériaux mésoporeux ordonnés ou mésostructurés, thermiquement stables, utiles notamment en catalyse hétérogène.

Au sens strict du terme, les matériaux dits mésoporeux sont des solides présentant, au sein de leur structure, des pores possédant une taille intermédiaire entre celle des micropores des matériaux de type zéolites et celle des pores macroscopiques.

Plus précisément, l'expression "matériau mésoporeux " désigne un matériau qui comporte spécifiquement des pores de diamètre moyen compris entre 2 et 50 nm, désignés par le terme de "mésopores". Typiquement, ces composés sont des composés de type silices amorphes ou paracristallines dans lesquelles les pores sont généralement distribués de façon aléatoire, avec une distribution très large de la taille des pores.

En ce qui concerne la description de tels matériaux, on pourra notamment se reporter à *Science,* vol. 220, pp. 365-371 (1983) ou encore au *Journal of Chemical Society, Faraday Transactions*, 1, vol. 81, pp. 545-548 (1985).

Les matériaux dits "structurés" sont quant à eux des matériaux présentant une structure organisée, et caractérisés de façon plus précise par le fait qu'ils présentent au moins un pic de diffusion dans un diagramme de diffusion de rayonnement de type diffusion par des rayons X ou par des neutrons. De tels diagrammes de diffusion ainsi que leur mode d'obtention sont notamment décrits dans *Small Angle X-Rays Scattering* (Glatter et Kratky - Academic Press London ― 1982).

Le pic de diffusion observé dans ce type de diagramme peut être associé à une distance de répétition caractéristique du matériau considéré, qui sera désignée dans la suite de la présente description par le terme de "période spatiale de répétition" du système structuré.

Sur la base de ces définitions, on entend par "matériau mésostructuré", au sens de l'invention, un matériau poreux structuré possédant une période spatiale de répétition comprise entre 2 et 50 nm.

A titre d'exemple particulier de matériaux mésostructurés, on peut citer les matériaux mésoporeux ordonnés. Il s'agit de matériaux mésoporeux qui présentent un agencement spatial organisé des mésopores présents dans leur structure, et qui de ce fait possèdent effectivement une période spatiale de répétition associée à l'apparition d'un pic dans un diagramme de diffusion.

La famille des matériaux de dénomination générique "M41S", notamment décrite par Kresge et al. dans *Nature,* vol. 359, pp. 710-712 (1992) ou par Q. Huo et al. dans *Nature*, vol. 368, pp. 317-321 (1994) constitue l'exemple le plus connu de matériaux mésostructurés et mésoporeux ordonnés : il s'agit de silices ou d'aluminosilicates dont la structure est formée de canaux bi- ou tridimensionnels ordonnés selon un agencement hexagonal (MCM-41) ou cubique (MCM-48), ou encore qui possèdent une structure vésiculaire ou lamellaire (MCM-50).

Il est à noter que, bien qu'ils soient constitués d'une structure présentant des canaux et non des mésopores, les composés dits MCM-41 et MCM-48 sont généralement décrits dans la littérature comme étant des matériaux mésoporeux ordonnés. Fengxi Chen et al., par exemple, décrivent en effet ,dans Chemicals Materials, vol. 9, No 12, p. 2685 (1997), les canaux présents au sein de ces structures comme des "mésopores bi- ou tridimensionnels".

En revanche, les matériaux de structure vésiculaire ou lamellaire de type MCM-50, ne sauraient quant à eux être assimilés à des structures mésoporeuses, dans la mesure où leurs parties poreuses ne peuvent être considérées comme des mésopores. Elles seront donc désignées uniquement par le terme de matériaux mésostructurés dans la suite de la description.

Les matériaux mésostructurés et mésoporeux ordonnés, et en particulier les matériaux du type des M41S définis ci-dessus; sont généralement obtenus par un procédé dit de "texturation par cristaux liquides", usuellement désigné par les initiales "LCT" correspondant à l'expression anglaise *"Liquid Crystal Templating*". Le procédé de texturation "LCT" consiste à former une matrice minérale telle qu'un gel de silice à partir de précurseurs minéraux en présence de composés amphiphiles de type tensioactifs, généralement désignés par le terme d'agents "texturants".

Le terme "texturation par cristaux liquide" vient du fait qu'on peut considérer schématiquement que la structure de cristal liquide adoptée par les molécules de tensioactif en présence des précurseurs minéraux imprime à la matrice minérale sa forme finale.

En d'autres termes, on peut considérer qu'au sein de la structure cristal liquide, les précurseurs minéraux se localisent sur les parties hydrophiles des composés amphiphiles avant de se condenser entre eux, ce qui confère à la matrice minérale obtenue *in fine* un agencement spatial calqué sur celui du cristal liquide. Par élimination du tensioactif, notamment par traitement thermique ou entraînement par un solvant, on obtient un matériau mésostructuré ou mésoporeux ordonné, qui constitue l'empreinte de la structure cristal liquide initiale.

Compte tenu de leur haute surface spécifique et de leur structure particulière, les matériaux mésostructurés présentent, de façon générale, un grand intérêt, notamment dans le domaine de la catalyse, de la chimie d'absorption ou de la séparation membranaire.

Cependant, les matériaux mésostructurés stables actuellement connus sont essentiellement constitués, de silice, d'oxyde de titane, de zircone et/ou d'alumine, et les tentatives réalisées pour obtenir des matériaux mésoporeux à base de constituants différents, ne mènent généralement qu'à des composés de faible stabilité, ce qui interdit leur utilisation à l'échelle industrielle.

L'intégration dans une structure mésoporeuse ordonnée de composés chimiques capables d'induire des propriétés spécifiques, et notamment des propriétés intéressantes en termes de catalyse, ne peut pas être réalisée dans bien des cas.

La présente invention a pour but de fournir des matériaux mésostructurés qui présentent, au sein de leur mésostructure, des composés chimiques possédant des propriétés catalytiques intrinsèques et capables d'induire des propriétés de catalyse accrue au matériau, mais sans pour autant affecter la stabilité de la mésostructure réalisée.

Plus précisément, la présente invention a pour objet un matériau mésostructuré, thermiquement stable, dont les parois de la mésostructure comprennent :
(a) une matrice minérale ; et
(b) dispersées au sein de cette matrice minérale (a), des particules de dimensions nanométriques à base d'au moins une terre rare T et d'au moins un élément de transition M différent de cette terre rare, dans lesquelles :
   (b1) la terre rare T est au moins partiellement sous forme d'un oxyde, hydroxyde et/ou oxyhydroxyde, l'élément de transition M étant alors au moins partiellement à l'état d'oxydation 0 ;
      ou
   (b2) la terre rare T et l'élément de transition M sont au moins partiellement présents sous forme d'un oxyde mixte possédant une structure cristalline.

Avantageusement, le matériau mésostructuré de la présente invention est un solide présentant au moins une structure organisée choisie parmi :
- les mésostructures mésoporeuses de symétrie hexagonale tridimensionnelle P63/mmc, de symétrie hexagonale bidimensionnelle P6mm, de symétrie cubique tridimensionnelle la3d, Im3m ou Pn3m ; ou
- les mésostructures de type vésiculaires, lamellaires ou vermiculaires.

En ce qui concerne la définition de ces différentes symétries et structures, on pourra se référer par exemple à *Chemical Materials*, vol. 9, No 12, pp. 2685-2686 (1997) ou encore à *Nature,* vol. 398, pp.223-226 (1999).

Dans le cas le plus général, les périodes spatiales de répétition caractérisant les mésostructure des matériaux de l'invention, déterminées par des méthodes de diffusion par des rayons X (telle que la méthode de diffusion à petits angles, désignée en anglais par le terme de "*small angles X-ray scattering*") ou de diffusion par des neutrons, sont généralement comprises entre 5 nm et 50 nm. De préférence elles sont inférieures à 20 nm, et avantageusement inférieures à 15 nm. Avantageusement, elles sont supérieures à 6 nm.

L'épaisseur globale des parois des mésostructures des matériaux de l'invention est quant à elle généralement comprise entre 2 nm et 20 nm. Avantageusement, l'épaisseur des parois est supérieure à 3 nm, et de façon encore plus préférentielle supérieure à 4 nm. Ainsi, elle peut notamment être comprise entre 3 et 15 nm, et avantageusement entre 4 et 10 nm.

Dans le cas particulier des structures mésoporeuses ordonnées, le diamètre moyen des pores est généralement compris entre 2 et 30 nm. Avantageusement, ce diamètre moyen est inférieur à 20 nm, et plus préférentiellement inférieur à 10 nm.

Compte tenu de leur caractère mésostructuré, les matériaux de l'invention présentent, dans le cas général, une surface spécifique élevée, comprise généralement entre 500 et 3000 m²/cm³. De préférence, les matériaux de l'invention présente une surface spécifique supérieure à 600 m²/cm³, et avantageusement supérieure à 800 m²/cm³.

Les surfaces spécifiques indiquées ci-dessus, exprimées en unités de surface par unités de volume de matériau, sont calculées en multipliant la valeur de la surface spécifique BET déterminée expérimentalement (selon la méthode Brunauer ― Emmet - Teller, décrite notamment dans *the Journal of the* *American Chemical Society,* volume 60, page 309 (février 1938) et correspondant à la norme NF T45007), mesurée en m²/g, par la valeur théorique de la densité du matériau (exprimée en g/cm³).

Outre leur caractère mésostructuré, les matériaux de l'invention sont également caractérisés par leur stabilité thermique.

Au sens de l'invention, un matériau mésostructuré est considéré comme thermiquement stable dans la mesure où sa mésostructure est conservée jusqu'à une température d'au moins 400°C.

A ce sujet, il est à noter que, dans le cas général, les matériaux mésostructurés de l'état de la technique présentent rarement une telle stabilité thermique. En effet, l'exposition d'un matériau mésostructuré à des températures élevées mène généralement à une fragilisation importante des parois de la mésostructure, notamment du fait la cristallisation de la matrice minérale, qui est susceptible d'engendrer une diminution de l'épaisseur des parois et l'apparition de contraintes, ce qui peut conduire à un phénomène d'effondrement de la mésostructure.

La présente invention permet, de façon surprenante de foumir des composés très stables en température.

Ainsi, la stabilité thermique des matériaux de l'invention est avantageusement telle que la mésostructure est conservée, même après un traitement thermique à une température supérieure ou égale à 500°C, voire supérieure à 600°C. Dans certains cas, on peut même soumettre les matériaux de l'invention à des températures qui peuvent aller jusqu'à 700°C, et même parfois jusqu'à 800 °C, sans nuire à la stabilité de leur mésostructure.

En règle générale, notamment de façon à conférer au matériau une stabilité thermique importante, on préfère que la matrice minérale (a) du matériau mésostructuré de la présente invention soit à base de silice, de zircone, d'alumine et/ou d'oxyde de titane.

Avantageusement, la matrice minérale (a) est constituée majoritairement de silice. Ainsi, la matrice minérale (a) peut avantageusement être constituée de silice, ou bien de mélanges silice-alumine, silice-titane et/ou silice-zircone, lesdits mélanges étant alors caractérisés par des teneurs en silicium supérieures à 50 % en moles, de préférence supérieures à 75 % en moles, et avantageusement supérieures à 85% en moles.

Quelle que soit sa nature, il est à souligner que, dans le matériau de l'invention, la matrice minérale (a) joue spécifiquement un rôle de liant entre les particules (b). En d'autres termes, les particules (b) sont présentes au sein des parois de la mésostructure, où elles sont dispersées dans la matrice liante. Il est donc en particulier à souligner que les matériaux selon l'invention sont notamment à distinguer de matériaux mésoporeux incluant des particules dans l'espace interne de leurs pores.

Les particules (b) présentes au sein des parois des matériaux de l'invention sont, de façon spécifique, des particules de dimensions nanométriques. Au sens de l'invention, on entend par ce terme, au sens le plus général, des particules dont les dimensions sont comprises entre 1 et 200 nm.

De préférence, les particules (b) sont des particules de morphologie sphérique ou légèrement anisotrope dont au moins 50% de la population possède un diamètre moyen compris entre 2 nm et 25 nm, avantageusement entre 3 et 15 nm, avec une répartition granulométrique de ces particules de préférence monodisperse. De façon avantageuse, ces particules présentent, pour au moins 50 % de leur population, un diamètre moyen inférieur à 12 nm, et de préférence inférieur à 10 nm. Avantageusement, ce diamètre moyen peut ainsi par exemple être compris entre 3 et 10 nm pour au moins 50 % des particules.

De façon plus particulière, les particules (b) peuvent également se présenter, dans certains cas, sous forme de particules fortement anisotropiques, de type bâtonnets, à la condition que, pour au moins 50% de la population de ces particules, le diamètre transversal moyen est compris entre 1 et 25 nm, de préférence entre 2 et 20 nm, et que, pour au moins 50% des particules, la longueur ne dépasse pas 200 nm, et reste avantageusement inférieure à 100 nm. De préférence, la répartition granulométrique des particules est monodisperse.

On peut également envisager, dans certains cas, la mise en oeuvre de particules (b) se présentant sous forme de plaquettes, d'épaisseur moyenne comprise entre 1 et 20 nm, de préférence entre 2 et 10 nm, et de grandes dimensions moyennes comprises entre 20 et 200 nm, et de préférence inférieures à 100 nm.

De façon avantageuse mais nullement limitative, les particules de dimension nanométrique présentes dans les matériaux de la présente invention sont des particules cristallines ou partiellement cristallisées, c'est-à-dire qu'elles présentent un taux de cristallinité, mesuré par diffraction de rayons X, allant de 2 à 100 % en volume, ce taux de cristallinité étant de préférence supérieur à 50%, et avantageusement supérieur à 10%, voire à 20%. La présence de telles particules partiellement cristallisées au sein de la phase minérale permet de conférer aux matériaux mésostructurés de l'invention, en plus d'un agencement ordonné de leur réseau de pores et de leur stabilité thermique, un taux de cristallinité global de leurs parois qui est alors généralement supérieur à 5% en volume. Avantageusement, le taux de cristallinité des parois est alors supérieur à 10% en volume, de préférence supérieur à 20% en volume, et de façon particulièrement avantageuse supérieur à 30% en volume.

Le terme "taux de cristallinité global", tel qu'il est employé dans la présente description, désigne le taux de cristallinité des parois de la structure, qui prend globalement en compte à la fois la cristallinité éventuelle de la phase minérale liante et la cristallinité des particules de dimension nanométrique incluses dans cette phase liante. Il est donc à noter que la notion de cristallinité du matériau au sens de l'invention concerne spécifiquement la cristallinité propre des parois du matériau. Elle est de ce fait notamment à distinguer de l'ordre présenté, à un niveau plus macroscopique, par le réseau de pores de la structure mésoporeuse.

De façon spécifique, les particules (b) intégrées dans la phase minérale liante des matériaux de l'invention sont des particules à base d'une terre rare T et d'un élément de transition M différent de la terre rare T.

Par le terme de "terre rare", on désigne, au sens de la présente invention, un élément métallique choisi parmi l'yttrium et les lanthanides, les lanthanides étant les éléments métalliques dont le numéro atomique est compris, de façon inclusive, entre 57 (lanthane) et 71 (lutécium).

Le terme "élément de transition" désigne quant à lui, au sens de l'invention, un élément métallique choisi dans les colonnes Ib, IIb, IIIa (comprenant les lanthanides), IVa, Va, VIa, VIIa, et VIII de la classification périodique publiée dans le Supplément au Bulletin de la Société Chimique de France n° 1 (janvier 1966). En d'autres termes, il s'agit d'un élément dont le numéro atomique est compris, de façon inclusive, entre 21 et 30, entre 39 et 48, ou entre 57 et 80.

Selon une première variante avantageuse, les particules (b) présentes au sein des matériaux mésostructurés de l'invention comprennent :
- un oxyde, hydroxyde et/ou oxyhydroxyde de la terre rare T ; et
- l'élément de transition M, différent de la terre rare T, au moins partiellement à l'état d'oxydation 0.

Par "oxyde, hydroxyde et oxyhydroxyde de la terre rare T", on entend respectivement , au sens de l'invention, un oxyde, hydroxyde ou un oxyhydroxyde intégrant essentiellement des cations de la terre rare T, et dans lequel une partie des cations de la terre rare T peuvent éventuellement être substitués par au moins un type de cation métallique autre qu'un cation de la terre rare T, notamment par des cations alcalins (notamment Li⁺, Na⁺ ou K⁺), des cations alcalino-terreux (en particulier Mg²⁺ ou Ca²⁺), des cations d'éléments de transitions tels que définis précédemment (comme par exemple des cations Ag⁺, Mra²⁺, Mn³⁺, Ce⁴⁺, Ce³⁺, Ti⁴⁺, Zr⁴⁺), ou encore par des cations d'aluminium ou d'étain.

Dans cette première variante, notamment de façon à ce que la présence combinée du composé de la terre rare T et de l'élément de transition M confère au matériau des propriétés catalytiques intéressantes, on préfère généralement qu'au moins une partie de l'élément de transition M présent à l'état d'oxydation 0 soit localisé à la périphérie des particules (b). On préfère cependant dans ce cas que l'élément de transition M ne recouvre pas totalement les particules (b). En effet, il est également préférable qu'au moins une partie de l'oxyde, hydroxyde et/ou oxy-hydroxyde de terre rare soit présent à la périphérie des particules (b).

De façon particulièrement avantageuse selon cette première variante, la terre rare T, présente à l'état cationique dans l'oxyde, l'hydroxyde et/ou l'oxy-hydroxyde, est choisie parmi l'yttrium, le lanthane, le cérium, le praséodyme, le néodyme, le samarium, l'europium, le gadolinium, le terbium, ou le dysprosium, et de préférence parmi l'yttrium, le lanthane, le cérium et l'europium. Par ailleurs, la terre rare T est de préférence au moins partiellement présente sous la forme d'un oxyde de terre rare.

Selon cette première variante de l'invention, l'élément de transition M est quant lui de préférence choisi parmi les métaux possédant, dans les conditions normales de température et de pression, des potentiels d'oxydoréduction (métal/cation(s) métallique(s) correspondant(s)), par rapport à l'électrode normale à hydrogène, supérieurs à -0,3 V. ainsi, l'élément de transition M est avantageusement choisi, dans la première variante, parmi des métaux nobles tels que le rhodium, le platine, le palladium, ou le ruthénium, ou encore parmi d'autres métaux tels que le cobalt, le cuivre, l'argent ou le nickel. La seconde variante de l'invention ne saurait toutefois être limitée à ces métaux particuliers, et on peut notamment envisager la mise en oeuvre de métaux possédant des potentiels d'oxydoréduction plus faible, tels que le manganèse, par exemple. L'élément de transition M peut être présent seul à l'état d'oxydation 0 ou en association avec au moins un autre élément de transition à l'état 0.

Ainsi, à titre d'exemples particulièrement avantageux de particules (b) utilisables selon la première variante de l'invention, on peut notamment citer les particules à base d'oxydes de terre rare dits "dopées" par la présence d'un ou plusieurs métaux à l'état d'oxydation 0, et notés (oxyde de terre rare : métal). On peut ainsi mentionner en particulier les particules à base d'oxydes dopés de type (CeO₂ : Ni) ; (CeO₂ : Ru) ; (CeO₂ : Ni+Ru) ; (CeO₂ : Pd) ; (CeO₂ : Pd+Pt) ; (CeO₂ : Mn) ; (La₂O₃: Co) ; (La₂O₃: Mn) ; (La₂O₃: Pd) (où le lanthane est partiellement substitué par des cations cérium); (CeₓMn_{y}O_{z}: Pd) (où x est compris entre 0,5 et 0,9 ; y est compris entre 0,1 et 0,5 ; et z est compris entre 1,8 et 3,2) (Y₂O₃ : Co) ; ou encore (Y₂O₃ : Mn).

Quelle que soit leur composition exacte, les particules (b) présentes dans les particules (b) de la première variante de l'invention sont de préférence caractérisées par un rapport molaire (métal M/terre rare T) compris entre 0,002 et 0,2, et de préférence compris entre 0,005 et 0,1.

Dans le cas particulier de la présence d'au moins un autre élément de transition que l'élément de transition M à l'état d'oxydation 0 que le métal M, le rapport molaire (métaux à l'état d'oxydation 0 (comprenant le métal M) / terre rare T) est avantageusement compris entre 0,002 et 0,2.

Selon une seconde variante de l'invention, les particules (b) présentes au sein de la matrice minérale (a) sont à base d'un oxyde mixte possédant une structure cristalline intégrant des cations de la terre rare T et des cations dudit élément de transition M, différent de la terre rare T.

Dans la présente description, le terme "oxyde mixte" désigne, au sens large, tout oxyde à base d'au moins deux éléments métalliques différents. De façon particulière, les oxydes mixtes spécifiquement présents dans les particules (b) selon la seconde variante de l'invention sont des oxydes mixtes à base de cations de la terre rare T et de l'élément de transition M, mais ils peuvent intégrer d'autres cations métalliques, et notamment des cations de terres rares, de métaux de transition, de métaux alcalins ou alcalino-terreux, ou encore d'aluminium ou d'étain.

De façon spécifique, les oxydes mixtes mis en oeuvre selon la seconde variante de l'invention sont des oxydes présentant une structure cristalline. Ainsi, il s'agit avantageusement d'oxydes présentant une structure de type perovskite ou pyrochlore, ou encore de structure analogue à celle de K₂NiF₄. De façon particulièrement avantageuse, il s'agit d'une structure de type perovskite.

Selon la seconde variante de l'invention, quelle que soit la structure exacte des oxydes mixtes mis en oeuvre, la terre rare T est avantageusement choisie parmi l'yttrium, le lanthane, le cérium, le praséodyme, le néodyme, le samarium, l'europium, le gadolinium, le terbium, ou le dysprosium, et de préférence parmi le lanthane, le cérium ou l'yttrium. L'élément de transition M est quant à lui en de préférence choisi parmi le titane, le chrome, le manganèse, le fer, le cobalt, le nickel, le cuivre, le zinc, le zirconium, l'argent, ou bien encore une terre rare différente de la terre rare T. Avantageusement, l'élément de transition M est choisi parmi le manganèse, le fer, le cobalt, le nickel, le cuivre, l'argent, ou une terre rare différente de la terre rare T.

Ainsi, à titre d'exemples non limitatifs d'oxydes mixtes susceptibles d'être mis en oeuvre selon la seconde variante de l'invention on peut citer :
- les perovskites, de formule générale ABO₃ (où A et B représentent les deux sites cristallins caractéristiques d'une structure perovskite), et dans lesquelles des cations de la terre rare T occupent des sites de type A et où des cations du métal M occupent des sites de type B.
   De façon avantageuse, les sites A et B des perovskites de l'invention peuvent être partiellement occupés par des cations de métaux autres que T et M, dits "cations substituants". Dans ce cas, la terre rare T reste toutefois avantageusement majoritaire dans les sites A (le pourcentage d'occupation des sites A par T reste ainsi de préférence supérieur à 50%, avantageusement supérieur à 60%, et de façon particulièrement préférée supérieur à 70%) et le métal M reste également de préférence majoritaire au sein des sites B (le pourcentage d'occupation des sites B par M reste quant à lui de préférence supérieur à 50%, avantageusement supérieur à 60%, et de façon particulièrement préférée supérieur à 70%). Dans le cas spécifique ou les sites A ou B sont partiellement substitués, les cations substituants sont avantageusement à un degré d'oxydation autre que les cations de T ou de M occupant le reste de ces sites, ce qui mène notamment à la création de lacunes de type cationique ou anionique, souvent intéressantes en catalyse.
   A titre d'exemple de perovskites utiles selon l'invention, on peut notamment citer les perovskites de formule TMO₃ (à base uniquement de la terre rare T et du métal M), et en particulier LaMnO₃ , La CoO₃ , La CeO₃ , LaFeO₃ , ou encore La NiO₃ , ou encore les perovskites substituées sur les sites A ou B (parfois dites "dopées"), telles que La_{0,8}Ag_{0,2}MnO₃ , LaMn_{0,6}Cu_{0,4}O₃ , LaCe_{0,75}Co_{0,25}O₃ , La_{0,8}Mg_{0,2}FeO₃ , ou encore LaNi₁₋ₓFeₓO₃ , où x est compris de façon inclusive entre 0,02 et 0,4.
- les pyrochlores, de formule générale A₂B₂O₇ (où A et B représentent les deux sites cristallins caractéristiques d'une structure pyrochlore), et dans lesquelles des cations de la terre rare T occupent des sites de type A et où des cations du métal M occupent des sites de type B. Là encore, ces sites A et B peuvent avantageusement être partiellement occupés par des cations substituants du même type que ceux décrits dans le cas des perovskites, leur état d'oxydation étant là aussi choisi avantageusement de façon à créer des lacunes cationiques
ou anioniques au sein du réseau cristallin pyrochlore. Comme dans le cas des perovskites, la terre rare T reste alors avantageusement majoritaire dans les sites A et le métal M reste également de préférence majoritaire au sein des sites B, avec des taux d'occupation des sites A par T généralement supérieur à 50%, avantageusement supérieur à 60%, et de préférence supérieur à 70% ; et avec un taux d'occupation des sites B par M de préférence supérieur à 50%, avantageusement supérieur à 60%, et de façon encore plus préférée supérieur à 70%.. A titre d'exemple de pyrochlores utiles selon l'invention, on peut notamment citer les composés de formule T₂M₂O₇ (à base uniquement d'une terre rare T et d'un métal M), et en particulier Ce₂Sn₂O₇, et les pyrochlores substituées telles que Ce_{1,2}Ca_{0,8}Sn₂O₇ ou les pyrochlores de formule Ce₂₋ₓSrₓSn₂O₇ , dans laquelle x est compris de façon inclusive entre 0,2 et 1,2.
- les oxydes mixtes de formule générale A₂BO₄ présentant une structure analogue à celle de K₂NiF₄ (où A et B représentent les deux sites cristallins caractéristiques de ladite structure), et dans lesquelles des cations de la terre rare T occupent des sites de type A et où des cations du métal M occupent des sites de type B. Là également, les sites A et B peuvent avantageusement être partiellement occupés par des cations substituants du même type que ceux décrits dans le cas des perovskites, leur état d'oxydation étant là aussi choisi avantageusement de façon à créer des lacunes de type cationique ou anionique au sein du réseau cristallin. Comme dans le cas des perovskites et des pyrochlores, la terre rare T reste alors avantageusement majoritaire dans les sites A et le métal M reste également de préférence majoritaire au sein des sites B, avec des taux d'occupation des sites A par T généralement supérieur à 50%, avantageusement supérieur à 60%, et de préférence supérieur à 70% ; et avec un taux d'occupation des sites B par M de préférence supérieur à 50%, avantageusement supérieur à 60%, et de façon encore plus préférée supérieur à 70%. A titre d'exemple de tels oxydes mixtes, on peut notamment citer les oxydes mixtes de type La₂NiO₄, où les sites A ou B sont éventuellement dopés par des cations d'argent, de calcium, de strontium, de magnésium, de manganèse, de fer, de cobalt, de nickel, de zirconium, de molybdène, de cérium, de gadolinium, de praséodyne ou d'europium.

Dans la seconde variante de l'invention, quelle que soit la nature de l'oxyde mixte, les particules (b) à base de cet oxyde mixte peuvent intégrer en outre au moins élément de transition M' présent à l'état d'oxydation 0.

On préfère alors généralement qu'au moins une partie de l'élément de transition M' présent à l'état d'oxydation 0 soit localisé à la périphérie des particules (b). On préfère par ailleurs que l'élément de transition M' ne recouvre pas totalement les particules (b). En effet, il est également généralement préférable qu'au moins une partie de l'oxyde mixte soit présent à la périphérie des particules (b).

De façon particulièrement avantageuse, l'élément de transition M' éventuellement présent est choisi, le cas échéant, parmi les métaux possédant, dans les conditions normales de température et de pression, des potentiels d'oxydoréduction (métal/cation métallique correspondant), par rapport à l'électrode normale à hydrogène, supérieurs à -0,3 V. Ainsi, l'élément de transition M' est avantageusement choisi parmi le rhodium, le platine, le palladium, ou le ruthénium, l'argent, le cobalt, le cuivre, ou encore le nickel. On peut toutefois notamment envisager la mise en oeuvre d'autres métaux possédant des potentiels d'oxydo-réduction plus faible, tels que le manganèse, par exemple.

Quel que soit la nature de l'élément de transition M', le ratio molaire (métal M'/(terre rare T+ métal M)) est, lorsqu'un tel élément à l'état d'oxydation est présent, avantageusement compris entre 0,002 et 0,05.

Quelle que soit la nature exacte des particules (b) intégrées dans la matrice (a), il est à noter que les matériaux mésoporeux les intégrant sont susceptibles de présenter des propriétés intéressantes en catalyse. Notamment de façon à optimiser ces propriétés catalytiques, on préfère donc souvent, dans le cas le plus général, qu'une partie au moins des particules intégrées dans la phase minérale liante soit en contact avec les parties poreuses constituant l'espace interne (pores, canaux...) du matériau mésostructuré, notamment de façon à bénéficier de façon optimale des propriétés induites par la présence des particules (b). En d'autres termes, le matériau selon l'invention est, de façon préférentielle, un matériau où la phase minérale (a) joue effectivement un rôle de liant inter-particulaire, mais n'englobe pas totalement les particules (b) qu'elle solidarise.

Par ailleurs, si la présence des particules (b) est importante pour conférer au matériau de l'invention ses propriétés spécifiques, il est également important de considérer le rôle primordial de consolidation inter-particulaire joué par la phase minérale. A ce sujet, il est à noter qu'il est souvent préférable, de façon à assurer une stabilité suffisante du matériau, que le rapport volumique (particules) / (particules+matrice minérale) se situe en deçà de 95 %.

Dans les matériaux de l'invention, ce rapport volumique (particules) / (particules+matrice minérale) est généralement compris entre 5 et 95 %. De préférence, ce rapport est au moins égal à 10 % en volume, de façon particulièrement avantageuse au moins égal à 20 % en volume, et de façon encore plus préférée au moins égal à 30% en volume. Il est par ailleurs de préférence inférieur à 90% en volume, et avantageusement inférieur à 85% en volume. Ainsi, ce ratio peut avantageusement être compris entre 40% et 80% en volume.

Selon un second aspect, la présente invention a également pour objet un procédé de préparation des matériaux mésostructurés décrits précédemment. Ce procédé est caractérisé en ce qu'il comprend les étapes consistant à :
(1) mettre en présence, dans un milieu comprenant un agent texturant :
   (i) des particules de dimensions nanométriques comprenant au moins un oxyde, hydroxyde ou oxyhydroxyde de la terre rare T, lesdites particules étant complexées par au moins un sel du métal M ; ou des particules de dimensions nanométriques comprenant au moins un oxyde mixte ou hydroxyde mixte de la terre rare T et du métal M ; et
   (ii) un précurseur minéral, susceptible de mener dans ledit milieu, à la formation d'une phase minérale insoluble, dans des conditions adéquates de pH ;
(2) laisser se réaliser, ou, si nécessaire, provoquer par un ajustement du pH, la formation de ladite phase minérale à partir dudit précurseur (ii), ce par quoi on obtient une mésostructure dont les parois sont formées par ladite phase minérale emprisonnant au moins une partie des particules de dimensions nanométriques initialement introduites ;
(3) si nécessaire, soumettre la mésostructure obtenue à l'issu de l'étape (2) à une étape de traitement thermique et/ou à une étape de réduction, conduite(s) le cas échéant de façon à ce que, à l'issu de ce(s) traitement(s), les particules présentes au sein des parois de la mésostructure comprennent des particules répondant à la définition des particules (b) donnée précédemment pour les matériaux de l'invention ; et
(4) si nécessaire, éliminer l'agent texturant éventuellement présent dans les pores de la mésostructure obtenue à l'issue de ces différentes étapes.

A l'issu du procédé, on récupère le produit obtenu.

Le milieu mis en oeuvre dans le procédé de l'invention est préférentiellement un milieu aqueux, mais il peut également s'agir, dans certains cas, d'un milieu hydro-alcoolique, et de préférence dans ce cas d'un milieu eau/éthanol. Dans le cas de la mise en oeuvre d'un milieu eau/alcool, le rapport du volume d'alcool sur le volume d'eau, mesurés avant mélange, est généralement inférieur ou égal à 1.

Par "agent texturant", on entend, au sens de la présente invention, un composé amphiphile de type tensioactif (ou un mélange de tels composés amphiphiles), mis en oeuvre en une quantité telle qu'il forme des micelles ou une phase cristal liquide organisée au sein du milieu où prend place le processus de texturation du procédé de l'invention. Les concentrations en agent texturant à mettre en oeuvre dans le milieu pour observer la formation de micelles ou d'une phase cristal liquide organisée dépendent de la nature exacte de l'agent texturant. Il est des compétences de l'homme du métier d'adapter cette concentration en fonction du diagramme de phases du ou des agent(s) texturant(s) retenu(s). Quelle que soit sa nature, l'agent texturant mène à un processus de texturation "LCT" tel que défini précédemment. En d'autres termes, les particules (i) et le précurseur minéral (ii) se localisent au niveau des zones hydrophiles des agents texturants organisés en micelles ou en phase cristal liquide, ce qui mène, lors de la formation de la phase minérale à l'obtention d'une mésostructure dont les parois sont constituées par des particules solidarisées entre elles par la phase minérale liante formée.

De façon générale, la plupart des composés amphiphiles peuvent être mis en oeuvre à titre d'agents texturants dans le procédé de l'invention. Cependant on préfère généralement utiliser des agents texturants non ioniques. A titre indicatif et non limitatif d'agents texturants non ioniques utilisables dans le procédé de l'invention, on peut citer les agents amphiphiles non ioniques de type copolymères séquencés, et plus préférentiellement les copolymères tribloc poly(oxyde d'éthylène)-poly(oxyde de propylène)-poly(oxyde d'éthylène) dit PEO-PPO-PEO, du type de ceux décrits notamment par Zhao et al. dans le *Journal of the American Chemical Society*, vol. 120, pp. 6024-6036 (1998), et commercialisés sous le nom de marque générique de Pluronic® par BASF. Avantageusement, on peut également mettre en oeuvre des tensioactifs non ioniques tels que les tensioactifs à base de poly(oxyde d'éthylène) greffés, du type des éthers de poly(éthylène glycol) commercialisés sous les noms de marques Brij®, Tergitol® ou Triton® par les sociétés Aldrich ou Fluka, ou encore du type des tensioactifs non ioniques à tête sorbitane du type de ceux commercialisés par Fluka sous les noms de marques Span® ouTween®.

Dans le cadre de la mise en oeuvre des agents texturants polyoxyéthylénés ci-dessus, les quantités d'agents amphiphiles mises en oeuvre sont généralement telles que, dans le milieu où s'effectue le processus de texturation, le rapport de la concentration molaire en motifs (CH₂CH₂O) présents dans les agents amphiphiles sur la somme des concentrations molaires en cations métalliques présents dans les particules (i) et dans le précurseur minéral (ii) est compris entre 0,05 et 3, et de préférence entre 0,1 et 2.

Dans le cas le plus général, quel que soit la nature exacte des agents texturants mis en oeuvre, le rapport molaire (agent texturant) / (cations métalliques présents dans les particules (i) + précurseur minéral (ii) ) est généralement compris entre 0,05 et 3. De préférence ce rapport est, dans le cas général, inférieur à 2.

Par ailleurs, il est à noter que, notamment de façon à améliorer l'homodispersité de la phase cristal liquide formée lors du processus de texturation, et à réaliser *in fine* une intégration effective des particules (i) au sein de la phase liante, on préfère souvent mettre en oeuvre un mélange de plusieurs type d'agents texturants, et notamment, le cas échéant, des mélanges de type tensioactif ionique, tensioactif non ionique.

Les particules (i) sont généralement introduites dans l'étape (1) du procédé sous forme de dispersions colloïdales au sein desquelles les particules sont de préférence non agglomérées et possèdent avantageusement une répartition granulométrique monodisperse. De façon avantageuse, les particules colloïdales présentes dans ces dispersions possèdent, pour au moins 50% de leur population, un diamètre moyen, déterminé par exemple par analyse de clichés obtenus en microscopie électronique à transmission, compris entre 1 nm et 25 nm et de préférence compris entre 2 et 15 nm. Ce diamètre moyen maximal présenté par au moins 50% de la population est avantageusement inférieur à 10 nm, et avantageusement supérieur à 3 nm. Ainsi, il peut être compris de façon avantageuse entre 3 et 8 nm.

Avantageusement, les particules (i) mises en oeuvre présentent un taux de cristallinité, mesuré par diffraction aux rayons X, compris entre 2 et 100% en volume. De préférence, ce taux de cristallinité est supérieur à 5% en volume.

De façon préférentielle, la concentration en particules dans les suspensions utilisées selon l'invention, c'est à dire la quantité de composé constitutif desdites particules contenu dans un litre desdites suspensions, est généralement supérieure à 0,25 mole par litre, et elle est avantageusement supérieure à 0,5 mole par litre. Généralement, cette concentration est inférieure à 4 moles par litre.

Les particules (i) à base d'un oxyde, hydroxyde ou oxyhydroxyde de la terre rare T, et complexées par au moins un sel du métal M, utilisables selon un premier mode de mise en oeuvre du procédé de l'invention, peuvent être obtenues (A) obtenues par diverses méthodes . On peut par exemple former un mélange aqueux comprenant un sel de lanthanide et un agent complexant. Les complexants utilisés présentent alors généralement une constante de dissociation de complexe avec le cation de lanthanide supérieur à 2,5. Dans une deuxième étape, on basifie alors le mélange par ajout d'une base de type ammmoniaque jusqu'à obtention d'un pH dont la valeur est à adapter en fonction de la nature du lanthanide, et du taux de complexant. Il est en particulier à noter que le pH est d'autant plus faible que le taux de complexant est élevé. On travaille généralement jusqu'à obtention d'un pH auquel on commence à observer la dissolution du précipité qui se forme dans la première partie de l'étape de basification. On additionne alors généralement à la dispersion de lanthanide précédemment élaborée un sel de métal M, ou un complexe de métal (par exemple Pd(NH3)2(NO3)2 ou Pd(NO3) ) en une quantité appropriée. On réajuste le pH dans une gamme de pH proche du pH de la dispersion de lanthanide. La dernière étape du procédé consiste alors généralement en un traitement thermique ,aussi appelé thermohydrolyse , qui consiste à chauffer le mélange obtenu à l'issue de l'étape précédente. A l'issue de ce traitement on obtient une dispersion colloidale d'oxyhydroxyde de lanthanide et de métal M .

Les particules (i) à base d'un oxyde mixte ou hydroxyde mixte de la terre rare T et du métal M, utilisables selon un second mode de mise en oeuvre, peuvent quant à elles être obtenues notamment par une méthode consistant par exemple à former un mélange aqueux comprenant un sel de lanthanide , un sel de métal M et un complexant. Les agents complexants généralement utilisés dans ce cas sont ceux présentant des constantes de dissociation de complexes avec le cation de lanthanide et le cation de métal M supérieures à 2,5. Dans une deuxième étape, on basifie le mélange à l'aide d'une base telle que l'ammoniaque, jusqu'à obtention d'un pH dont la valeur varie en fonction de la nature du lanthanide, du cation de métal M et du taux de complexant. Il est à noter, là aussi, que le pH est d'autant plus faible que le taux de complexant est élevé. On travaille généralement jusqu'à obtention d'un pH auquel on commence à observer la dissolution du précipité qui se forme dans la première partie de l'étape de basification. La dernière étape du procédé est alors généralement, là encore, une thermohydrolyse , qui consiste à chauffer le mélange basifié obtenu à l'issue de l'étape précédente. A l'issue de ce traitement on obtient une dispersion colloïdale d'oxyhydroxyde mixte de lanthanide et de l'élément M.

Dans le cas le plus général, le procédé de l'invention est avantageusement conduit soit en mélangeant les particules (i) sous la forme d'une dispersion colloïdale stable à une solution comprenant le précurseur métallique (ii) et l'agent texturant, soit en mélangeant une solution comprenant le précurseur métallique (ii) à une dispersion colloïdale stable comprenant les particules (i) et l'agent texturant.

Selon une variante avantageuse, le pH de la dispersion colloïdale et le pH de la solution contenant le précurseur sont choisis de façon à ce que leur mélange conduit à l'obtention d'un milieu dont le pH induit une précipitation de la phase minérale à partir du précurseur.

Selon une autre variante, le mélange réalisé peut également conduire à la formation d'un milieu dont le pH est tel que le précurseur reste stable. On additionne alors un acide (ou une base) au milieu de façon à abaisser (ou respectivement à augmenter) le pH jusqu'à une valeur pour laquelle on forme la matrice minérale.

Quelle que soit la variante mise en oeuvre, on préfère, notamment de façon à obtenir une solidarisation optimale des particules par la matrice minérale en cours de formation, que les particules colloïdales utilisées ne soient pas susceptibles de s'agglomérer entre elles aux différentes valeurs de pH auxquelles elles sont mises en oeuvre. Ainsi, on préfère que la stabilité colloïdale soit assurée tout au long du procédé, et tout particulièrement dans la dispersion colloïdale initialement introduite, et dans le milieu au sein duquel la précipitation de la phase minérale prend place. En fonction du milieu mis en oeuvre, on peut de ce fait par exemple éventuellement modifier la surface des particules de dimensions nanométriques utilisées, notamment de façon à stabiliser la dispersion et éviter ou à limiter les phénomènes de floculation lors du processus de texturation. Ainsi, lorsqu'on est amené à conduire le procédé en milieu basique, la surface des particules peut alors par exemple être modifiée par la présence d'anions d'acides organiques tels que par exemple des anions citrates, acétates ou formiates, ce qui confère aux particules des charges de surface négatives.

Que cette condition concernant la stabilité des particules aux différents pH de mise en oeuvre soit satisfaite ou non, on préfère souvent, notamment de manière à réaliser une incorporation effective des particules au sein de la phase minérale, que la formation de la phase minérale s'effectue le plus rapidement possible. A cet effet, on réalise donc généralement la formation de la phase minérale à partir du précurseur (ii) par une brusque variation du pH du milieu, d'une valeur de pH à laquelle le précurseur minéral est soluble jusqu'à une valeur de pH à laquelle la matière minérale précipite. Le procédé de l'invention ne saurait toutefois se limiter à la mise en oeuvre de ce mode particulier de réalisation.

. Par "précurseur minéral" au sens de l'invention, on entend un composé minéral ou organométallique susceptible de mener, dans des conditions adéquates de pH, à la formation d'une matrice minérale telle que la silice.

La nature exacte du précurseur minéral (ii) introduit dans l'étape (1) du procédé de l'invention dépend donc naturellement de la phase minérale que l'on souhaite former pour assurer la liaison inter-particulaire au sein du matériau final. Toutefois, dans la mesure où la phase minérale liante formée suite à l'ajout du précurseur minéral de l'étape est généralement constituée au moins majoritairement de silice, le précurseur minéral mis en oeuvre est avantageusement un silicate, de préférence un silicate alcalin, et avantageusement un silicate de sodium. Ce silicate peut alors être mis en oeuvre avec d'autres précurseurs minéraux tels qu'un oxychlorure de titane ou un aluminate de sodium, ou encore un oxychlorure de zirconium ou un oxynitrate de zirconium, ce par quoi on obtient *in fine* des phases minérales liantes de type SiO₂-TiO₂, SiO₂-Al₂O₃, ou encore SiO₂-ZrO₂.

Dans le cadre spécifique d'un précurseur silicate, on observe une polycondensation de silice lorsque le silicate est soumis à un pH compris entre 5 et 10. Néanmoins, notamment de façon à augmenter la cinétique de polycondensation de la silice, on préfère avantageusement que la formation de la matrice de silice à partir de silicate s'effectue à un pH compris entre 5,8 et 9,5 , de préférence à un pH inférieur à 8,5 , et avantageusement à un pH compris entre 6 et 8,5.

Ainsi, dans le cadre spécifique de la mise en oeuvre d'un silicate à titre de précurseur (ii), le processus de texturation peut, selon un premier mode de réalisation, s'effectuer par le mélange, réalisé en général de façon instantanée, d'une dispersion colloïdale des particules (i) et d'un milieu aqueux acide de pH compris entre 1 et 3,5 comprenant le silicate essentiellement à l'état d'acide silicique. Le milieu acide comprenant l'acide silicique mis en oeuvre dans ce cadre possède avantageusement un pH compris entre 1,5 et 2,5 , et il est généralement obtenu par une addition, de préférence réalisée de façon instantanée, d'une quantité adéquate d'une solution d'un acide fort, notamment d'acide chlorhydrique ou d'acide nitrique, dans une solution de silicate alcalin de pH initial généralement supérieur à 10 où le silicate est stable et ne mène pas à une polycondensation de silice. L'agent texturant est généralement incorporé dans le milieu acide ainsi obtenu avant le mélange avec la dispersion colloïdale, mais l'agent texturant peut également, selon une variante, être préalablement incorporé à la dispersion colloïdale qui sera ensuite mélangée au milieu acide.

Selon ce premier mode de réalisation, que l'agent texturant soit initialement présent au sein de la dispersion colloïdale ou au dans le milieu comprenant le précurseur minéral, on préfère généralement ajuster le pH de la dispersion colloïdale à un pH tel que le mélange de la dispersion et de la solution d'acide silicique conduit directement à l'obtention d'un milieu de pH compris entre 5,8 et 9,5. A cet effet, le pH de la dispersion colloïdale est entre 6 et 10,5, et de préférence entre 6 et 10. Selon ce premier mode de réalisation, il est souvent avantageux, suite au mélange de la dispersion colloïdale et du milieu acide comprenant l'agent texturant, d'effectuer l'addition d'un sel tel que par exemple NaCl, NH₄Cl ou encore NaNO₃, notamment pour accélérer la cinétique de formation de la silice.

Selon un second mode de réalisation possible lorsque le procédé de l'invention est spécifiquement conduit en mettant en oeuvre un précurseur silicate, on peut également réaliser l'addition d'une dispersion colloïdale de pH généralement compris entre 6 et 10,5, dans un milieu de pH supérieur à 10 comprenant le silicate à l'état stable et l'agent texturant. En règle générale, on obtient alors un milieu de pH supérieur à 9, généralement compris entre 9,5 et 12,5 ,comprenant l'agent texturant, le silicate stable et les particules (i). Généralement, dans cette gamme de pH, la stabilité colloïdale des particules spécifiques mises en oeuvre dans le procédé de l'invention est assurée. Selon ce second mode de réalisation, le processus de texturation est généralement amorcé par ajout d'un acide dans le milieu ainsi obtenu de façon à faire diminuer le pH jusqu'à une valeur comprise entre 6 et 9,5.

Un autre mode particulier de réalisation envisageable lorsqu'on souhaite former une matrice minérale à base de silice consiste à mettre en oeuvre à titre de précurseur minéral (ii) un alcoxyde de silicium de type tétra-éthyl-orthosilicate. Dans ce cas, la formation de silice a lieu de préférence en milieu acide, à un pH avantageusement inférieur à 3. Dans ce cadre, on réalise donc généralement l'addition d'une solution d'un alcoxyde de silicium de type tétra-éthyl-orthosilicate à l'état stable dans une dispersion colloïdare de pH faible, généralement inférieur à 3.

Dans le cas le plus général, quel que soit le précurseur minéral mis en oeuvre et quelles que soient les particules colloïdales utilisées, le processus de texturation est avantageusement conduit à température ambiante ou à une température supérieure à la température ambiante, de préférence à une température comprise entre 15°C et 90°C, et de façon particulièrement préférée entre 20°C et 65°C. Il est des compétences de l'homme du métier d'adapter ce paramètre de température en fonction de la nature de l'agent texturant utilisé et de l'agencement spatial du matériau mésoporeux ordonné qu'il souhaite obtenir, en fonction du diagramme de phase présenté par l'agent structurant mis en oeuvre.

En pratique, l'étape (2) de formation de la phase minérale à partir du précurseur minéral comprend généralement une étape de mûrissement. La durée de cette étape est variable et dépend naturellement de la nature du précurseur minéral (ii) utilisé. En fonction du précurseur mis en oeuvre, il est des compétences de l'homme du métier d'adapter cette durée, qui est typiquement de l'ordre de 1 à 20 heures. Cette étape de mûrissement est généralement conduite à une température comprise entre 15°C et 85°C, et de préférence à une température comprise entre 20°C et 60°C.

A l'issue du processus de texturation et de cette éventuelle étape de mûrissement, on obtient, dans le cas général, un solide mésostructuré dont les parois de la mésostructure comprennent une partie des particules (i) initialement introduites, liées entre elle par la matrice minérale formée à partir du précurseur (ii), et dans lequel les parties poreuses sont occupées par des molécules d'agent texturant. Le matériau obtenu peut alors éventuellement être soumis à une étape de lavage par un solvant, notamment par de l'eau ou par un solvant organique, et/ou à une étape de séchage.

De façon à obtenir un matériau de mésostructure poreuse tel que défini précédemment, il est parfois nécessaire de soumettre le solide obtenu à l'issu de l'étape (2) à une étape (3) de traitement thermique et/ou de réduction, de façon à modifier la structure ou la nature chimique des particules intégrées dans les parois.

C'est en particulier le cas dans le cadre spécifique de la préparation des matériaux décrits précédemment lorsqu'ils intègrent au sein de leurs parois des particules (b) comprenant à la fois un oxyde, hydroxyde ou oxyhydroxyde de la terre rare T et le métal M à l'état d'oxydation 0. Dans ce cas, on met en effet généralement en oeuvre de particules (i) comprenant au moins un oxyde, hydroxyde ou oxyhydroxyde de la terre rare T, lesdites particules étant complexées par au moins un sel du métal M, ou bien des oxydes et/ou hydroxydes mixtes de la terre rare T et de l'élément de transition M. De façon à obtenir, au sein des parois du matériau, des particules comprenant à la fois un oxyde, hydroxyde ou oxyhydroxyde de la terre rare T et le métal M à l'état d'oxydation 0, il est nécessaire, dans ce cas, de soumettre la structure obtenue à l'issue de l'étape (2) à une étape (3) de traitement thermique et de réduction, conduite de façon à former, à partir d'au moins une partie du sel du métal M, du métal M à l'état d'oxydation 0. De préférence, cette étape de traitement thermique et de réduction comprend :
- soit un traitement thermique réalisé sous atmosphère inerte (par exemple sous argon ou sous azote) et/ou sous atmosphère oxydante (et notamment sous air), suivi d'un second traitement thermique sous atmosphère réductrice (et notamment sous un mélange Ar/H₂) ;
- soit un traitement thermique direct sous atmosphère réductrice (et notamment sous un mélange Ar/H₂).

Selon un mode de réalisation particulier, on peut mettre en oeuvre des particules (i) spécifiques intégrant des additifs organiques de type acétate, citrate ou polyacrylate. Dans ce cas, l'étape de traitement thermique/réduction est effectuée par un traitement thermique sous atmosphère inerte ou oxydante de type argon, azote ou air.

Les conditions exactes de mise en oeuvre de l'étape de traitement thermique/réduction est naturellement à adapter en fonction de la nature exacte des particules mises en oeuvre, et en particulier de la nature des éléments M et T utilisés. En fonction des caractères oxydants et réducteurs des composés présents dans le matériau, il est des compétences de l'homme du métier d'adapter les paramètres de l'étape de traitement thermique/réduction de façon à obtenir les particules souhaitées au sein du matériau. Dans le cas général, les différents traitements thermiques réalisés (aussi bien sous atmosphère inerte, oxydante ou réductrice) sont avantageusement conduit selon un profil progressif de montée en température, de préférence avec une vitesse de montée en température comprise entre 0,2 et 5°C par minute, et avantageusement inférieure à 2°C par minute de façon à éviter une fragilisation du matériau. Ces traitements thermiques sont généralement conduits jusqu'à des températures comprises entre 250°C et 600°C, typiquement de l'ordre de 300 à 400°C, auxquelles le matériau est généralement maintenu entre 1 et 8 heures, ce qui mène généralement par ailleurs à une élimination de l'agent texturant présent au sein de la mésostructure.

Dans le cadre de la préparation d'un matériau comprenant au sein de ses parois des particules (b) comprenant un oxyde mixte de la terre rare T et du métal M présentant une structure cristalline du type de celle des perovskites, ou pyrochlores précédemment décrites, les particules (i) mises en oeuvre comprennent au moins un oxyde mixte ou un hydroxyde mixte de la terre rare T et du métal M. Dans le cas où ces particules (i) ne présentent pas une structure cristalline, une étape (3) de traitement thermique doit spécifiquement être conduite. En règle générale, cette étape de traitement thermique est conduite sous atmosphère inerte ou oxydante, et avantageusement selon un profil progressif de montée en température, de préférence avec une vitesse de montée en température comprise entre 0,1 et 5°C par minute, avantageusement inférieure à 2°C, et de préférence comprise entre 0,1 et 1°C par minute. Ces traitements thermiques sont généralement conduits jusqu'à des températures comprises typiquement comprises entre 250 et 400°C, auxquelles le matériau est généralement maintenu entre 1 et 8 heures, ce qui mène généralement, là encore, à une élimination de l'agent texturant présent au sein de la mésostructure. Il est à noter que, même dans le cas où une modification de la structure des particules introduites n'est pas nécessaire, une telle étape de traitement thermique est souvent recommandée, notamment de façon à consolider la mésostructure obtenue.

Dans le cas particulier de la préparation d'un matériau intégrant au sein de ses parois des particules comprenant à la fois un oxyde mixte de structure cristalline à base de la terre rare T et du métal M, et un métal M' à l'état d'oxydation 0, les particules (i) mises en oeuvre comprennent généralement au moins un oxyde mixte ou hydroxyde mixte de la terre rare T et du métal M, et ces particules sont complexées par au moins un sel du métal M'. Dans ce cas, une étape (3) de traitement thermique et de réduction est nécessaire de façon à faire passer au moins une partie du métal M' introduit sous forme de sel à l'état d'oxydation 0. Par ailleurs cette étape de traitement thermique est alors conduite de façon à ce que, à l'issu du traitement, les particules présentes au sein des parois de la mésostructure comprennent un oxyde mixte de la terre rare T et du métal M présentant une structure cristalline. En règle générale, le ou les traitement(s) thermique(s) conduit dans ce cadre particulier sont du type des étapes de traitement thermique précédemment décrites, avec un un profil progressif de montée en température, de préférence avec une vitesse de montée en température comprise entre 0,1 et 5°C par minute, généralement conduits jusqu'à des températures comprises typiquement comprises entre 300 et 400°C, auxquelles le matériau est généralement maintenu entre 1 et 8 heures.

Qu'une étape (3) de traitement thermique et/ou réduction soit conduite ou non, l'agent texturant présent dans le solide mésostructuré à l'issu du processus de texturation doit spécifiquement être éliminé pour qu'on obtienne un matériau intéressant en termes de catalyse.

Dans le cas où une étape (3) de traitement thermique et/ou réduction est spécifiquement réalisée, l'élimination de l'agent texturant est généralement comprise *de facto* dans l'étape de traitement thermique de l'étape (3). En effet, comme on l'a déjà souligné, le traitement thermique de l'étape (3) induit généralement, en même temps que la modification des particules présentes recherchée, une élimination thermique de l'agent texturant.

Dans le cas où une telle étape n'est pas conduite, ou bien quand les conditions de mise en oeuvre de cette étape ne sont pas suffisante pour éliminer l'agent texturant, une étape (4) d'élimination de l'agent texturant peut être nécessaire. Cette étape (4) peut notamment être réalisée le cas échéant par un traitement thermique. Dans ce cas, le traitement thermique est avantageusement réalisé selon un profil de montée en température compris entre 0,2°C par minute et 5°C par minute, et de préférence suivant un profil de montée en température compris entre 0,5°C par minute et 2°C par minute, de façon à ne pas dégrader le matériau. Cette montée en température est réalisée jusqu'à une température permettant l'élimination de l'agent texturant c'est à dire généralement jusqu'à une température comprise entre 250°C et 600°C, et typiquement au moins égale à 350°C. Le matériau est alors généralement maintenu à cette température pendant une durée avantageusement comprise entre 1 et 8 heures. Cette étape de traitement thermique peut être réalisée une première fois sous atmosphère inerte, notamment sous argon ou sous azote, puis une seconde fois sous atmosphère oxydante, et notamment sous air. Dans certains cas, elle peut être réalisée directement sous atmosphère oxydante, et avantageusement sous air le cas échéant.

Selon une autre variante, qui peut notamment être conduite lorsqu'une étape (3) de traitement thermique et/ou de réduction n'est pas nécessaire, l'élimination de l'agent texturant peut également être réalisée par entraînement par un solvant. Il est à noter que l'entraînement par un solvant est facilité par le fait qu'on met en oeuvre de façon préférentielle un composé amphiphile de type tensioactif non ionique, ce qui induit une interaction agent texturant-matrice suffisamment faible pour permettre ce type d'élimination.

Quelle que soit le mode d'élimination de l'agent texturant retenu, le solide obtenu peut en outre être soumis à un traitement thermique ultérieur, et notamment à une calcination. Le but de ce traitement thermique supplémentaire éventuel est notamment de consolider localement les parois de la mésostructure et d'augmenter la cristallinité du matériau.

A ce propos, il est néanmoins à souligner que, si le traitement thermique d'un matériau mésostructuré est susceptible d'induire une consolidation mécanique locale, il peut également mener en contrepartie, à une diminution de l'épaisseur des parois, ce qui cause généralement une fragilisation globale de la mésostructure obtenue.

En fonction des compositions de la phase minérale liante et des particules de dimension nanométrique mises en oeuvre, il est des compétences de l'homme du métier de conduire ou non le traitement thermique et d'adapter le cas échéant les températures auxquelles est soumis le matériau, de façon à ne pas nuire à sa stabilité finale.

A ce propos, il faut toutefois souligner que, de par la structure particulière des matériaux de l'invention, un traitement thermique sans fragilisation excessive est plus facile à réaliser dans le cas des matériaux mésostructurés de la présente invention que dans le cas des matériaux mésostructurés usuels décrits dans l'art antérieur.

En effet, le procédé particulier mis en oeuvre dans la présente invention, ainsi que l'utilisation spécifique de particules de dimensions nanométriques dans l'élaboration des matériaux de l'invention conduit, à l'issu de l'étape d'élimination de l'agent texturant, à des matériaux mésostructurés possédant des parois d'épaisseurs beaucoup plus importantes que dans le cas des mésostructures obtenues classiquement. De fait, le procédé de la présente invention permet d'obtenir des matériaux mésostructurés extrêmement stables qui, même après traitement thermique, présentent des épaisseurs de parois typiquement comprises entre 3 et 10 nm.

Par ailleurs, il est à noter que, lors des étapes éventuelles de traitement thermique, on peut observer une réaction entre les espèces chimiques présentes dans les particules et la phase minérale liante qui les contient. Cette réaction a pour conséquence une modification de la nature chimique de la phase minérale. Ainsi, dans le cas d'un matériau intégrant les particules dans une phase minérale de type silice, le traitement thermique peut conduire dans certains cas à la formation d'un silicate de la terre rare T et du métal M au sein de la phase minérale.

De façon générale, il reste à préciser que, dans certains cas, il peut arriver que les particules de dimension nanométrique obtenues soient totalement recouvertes par la matrice minérale. Si on souhaite que, dans le matériau final, les particules ne soient pas totalement englobées par la matrice, le matériau obtenu peut en outre être soumis à une attaque chimique partielle de la phase minérale, notamment par des composés alcalins de type NH₄OH ou NaOH ou encore par l'acide fluorhydrique. Dans ce cas, il est des compétences de l'homme du métier d'ajuster la concentration en ions hydroxydes ou fluorures ainsi que la durée du traitement et la température de mise en oeuvre, de façon à maîtriser la dissolution de la phase minérale. Dans ces conditions, le post-traitement permet de mettre à nu au moins une partie des particules intégrées au matériau, sans pour cela fragiliser la structure du matériau final.

Quel que soit leur mode d'obtention, les matériaux de l'invention peuvent avantageusement être utilisés à titre de catalyseur hétérogène, et notamment dans le domaine du raffinage des coupes pétrolières, de la dénitrification catalytique de gaz de combustions, en particulier dans le domaine de l'automobile, ou bien encore dans la catalyse de réactions d'oxydations ou de trans-estérifications, en particulier dans l'oxydation catalytique de composés organiques volatils ou encore dans la catalyse basique de la trans-estérification de carbonates. Les matériaux de l'invention peuvent également être utilisés à titre de charges pour réaliser le renfort de matrices polymères ou de films.

Les différents avantages de la présente invention apparaîtront encore plus explicitement à la lumière des exemples illustratifs et non limitatifs exposés ci-après.

### Exemple 1 : Préparation d'un matériau mésoporeux ordonné intégrant des particules à base d'oxyde d'yttrium, et de palladium à l'état d'oxydation 0.

### A - Préparation d'une dispersion colloïdale de particules de YPd(OH)₃

Dans un bécher, on a placé, sous agitation à 20°C, 65,35 g d'une solution de nitrate d'yttrium caractérisée par une concentration équivalente en La₂O₃ de 21,78% en masse (cette concentration équivalente en La₂O₃ correspond à un rapport massique m/M ou m représente la masse de La₂O₃ obtenue en calcinant sous air une masse M de la solution), ce qui représente 0,126 mole d'yttrium.

On a ensuite additionné à cette solution sous agitation 21,8 g (soit 0,105 mole) d'acide citrique (M= 192 g/mol), et on a additionné de l'eau déminéralisée jusqu'à obtenir un volume de 250 cm³ d'un mélange aqueux caractérisé par un rapport molaire acide citrique/yttrium de 0,83.

On a ajouté à ce mélange sous agitation, à l'aide d'une pompe doseuse, 165 cm³ d'une solution d'ammoniaque à 3,21 mole par litre, à un débit de 2,5 cm³ par minute. On alors obtenu un mélange visuellement limpide de pH égal à 8,25.

On a laissé ce mélange sous agitation à 20°C pendant 60 mn .

Suite à cette agitation, on a prélevé une aliquote de 50 ml de la dispersion ainsi préparée. On a ajouté à cette aliquote 0,3 ml d'une solution de Pd(NO3)2 à 0,98 mole par litre en palladium, commercialisée par la Société Comptoir Lyon Allemand Louyot.

Suite à cette addition, le pH a diminué et on l'a réajusté par ajout d'une solution de NH4OH 3,21 M jusqu'à obtenir une valeur de 8,25. Cette opération a été répétée 5 fois avec une dernière addition de 0,03 ml de Pd(NO₃)₂ ce qui représente une addition d'un volume total de 1,53 ml de solution de Pd(NO3)2 . La quantité totale d'ammoniaque 3,21 M additionnée est de 3,2 ml. Le pH de la dispersion obtenue in fine a été mesuré égal à 8,05.

La dispersion obtenue à l'issu de ces différents traitements a été fractionnée et immédiatement transférée dans des enceintes fermées (bombes de Parr), portée à 120°C pendant 16 heures.

A l'issu de ce traitement thermique, on a obtenu dans chaque bombe de Parr une dispersion colloïdale. On a réuni ces dispersions..

Après refroidissement jusqu'à la température ambiante, la dispersion obtenue a été lavée par ultrafiltration. Pour ce faire, on a additionné de l'eau distillée à raison de deux fois son volume à la dispersion, puis on a ultrafiltré sur une membrane de 3 kD jusqu'à réobtenir le volume initial de la dispersion, et on a répété une fois cette opération. On a ensuite concentré la dispersion par ultrafiltration.

La dispersion obtenue a été dosée par évaporation et calcination à 1000°C d'un volume donné de dispersion. On a déterminé une concentration équivalente égale à 0,82 mole par litre en yttrium.

Par cryo-microscopie électronique à transmission, on aobservé dans la dispersion obtenue des colloïdes de taille moyenne de l'ordre de 3 nm, individualisées et présentant une répartition monodisperse en taille.

### B - Elaboration du matériau mésoporeux SiO₂ : Y₂O₃ : Pd

Une solution (A) a été obtenue par obtenue par addition dans un bécher, sous agitation à 20°C, de :
- 1 g de Brij 56 (poly(oxyde d'éthylène) greffé commercialisé par Fluka) ;
- 5,5 g d'eau ; et
- 8,55 g d'une solution aqueuse de HCl 0,5 M

Cette solution, laissée sous agitation, a été transférée dans une enceinte fermée portée à 35°C.

Une solution aqueuse (B) de 15 ml de silicate de sodium à 0,4 M en SiO2 et de rapport molaire "SiO2/Na2O" de 3 a par ailleurs été réalisée. La solution B a été portée à 35°C.

On a alors additionné de manière instantanée la solution (B) dans la solution (A), de façon à obtenir un mélange visuellement transparent de pH égal à 2.

A ce mélange, on a alors additionné de manière instantanée 7,19 ml de la dispersion colloïdale précédemment préparée, ce qui représente 5,9 mmol d'yttrium ajoutées. Le pH du mélange obtenu a été mesuré égal à 6,3.

Ce mélange, tout d'abord limpide, s'est troublé au cours du temps avec la formation d'un précipité. On a laissé l'agitation se poursuivre durant 16 heures à 35°C.

On a ensuite porté le mélange à 80°C pendant 16 heures en enceinte fermée de façon à réaliser un mûrissement en température.

A l'issu de cette étape de mûrissement, on a centrifugé à 4500 tours par minute pendant 15 minutes. On a redispersé le culot de centrifugation obtenu dans 40 ml de solution d'eau déminéralisée et on a à nouveau centrifugé la dispersion obtenue à 4500 tours par minute pendant 15 minutes.

Suite à cette deuxième étape de centrifugation, on a séché le culot de centrifugation obtenu à 60°C pendant 16 heures, puis on l'a laissé refroidir.

On a calciné sous azote le solide obtenu avec une montée en température de 1°C par minute de 20°C à 500°C et on a maintenu la température de 500°C pendant 6 heures à 500°C.

On a laissé refroidir le solide obtenu, et on a effectué une nouvelle calcination, sous air cette fois, avec le même profil de température.

Le produit obtenu montre en microscopie électronique à transmission une mésostructure hexagonale.

### Exemple 2 : Préparation d'un matériau mésoporeux ordonné intégrant des particules à base d'un oxyde mixte La FeO₃ de structure pérovskite.

### A - Préparation d'une dispersion colloïdale de particules d'hydroxyde mixte lanthane-fer.

Dans un bécher, on a placé, sous agitation à 20°C, 101 g (soit 0,25 mole) de (Fe(NO₃)₃, 9 H₂O) et 105,94 g d'une solution aqueuse de nitrate de lanthane La(NO₃)₃ caractérisée par une concentration de 2,36 mole par litre (ce qui représente 0,25 mole de nitrate de lanthane ajouté). On a additionné de l'eau déminéralisée jusqu'à obtention d'un volume de 715 ml.

50 ml de la solution ainsi obtenue ont alors été additionnés, sous agitation, à 6,1 g d'acide citrique (C₆H₈O₇,H₂O), de façon à obtenir un mélange caractérisé par un rapport molaire acide citrique/métal de 0,83 : 1. On a ajouté, sous agitation, de l'ammoniaque 10M à ce mélange de façon à obtenir un pH de 6,3.

La dispersion obtenue a été fractionnée et immédiatement transférée dans des enceintes fermées (bombes de Parr); portées à 120°C pendant 16 heures.

A l'issu de ce traitement thermique, on a obtenu, dans chaque bombe de Parr, une dispersion colloïdale. On a réuni ces dispersions..

Après refroidissement jusqu'à la température ambiante, la dispersion obtenue a été lavée par ultrafiltration. Pour ce faire, on a additionné à la dispersion de l'eau distillée à raison de deux fois son volume, puis on a ultrafiltré sur une membrane de 3 kD jusqu'à réobtenir le volume initial de la dispersion, et on a répété une fois cette opération. On a ensuite concentré la dispersion par ultrafiltration jusqu'à obtenir une concentration en lanthane et fer de 0,7 mole par litre.

Par cryo-microscopie électronique à transmission, on a observé, dans la dispersion obtenue, des colloïdes de taille moyenne de l'ordre de 3 nm, parfaitement individualisées.

Après ultracentrifugation à 50 000 tours par minute pendant 6 heures d'une aliquote de la dispersion, on a recueilli un culot d'ultracentrifugation. Le dosage chimique de ce culot fait apparaître un rapport molaire La/Fe de 1 au sein des particules.

### B - Elaboration du matériau mésoporeux SiO2:La₂O₃

Une solution (A) a été obtenue par obtenue par addition dans un bécher, sous agitation à 20°C, de :
- 1 g de Brij 56 (poly(oxyde d'éthylène) greffé commercialisé par Fluka) ;
- 5,5 g d'eau ; et
- 8,55 g d'une solution aqueuse de HCl 0,5 M

Cette solution, laissée sous agitation, a été transférée dans une enceinte fermée portée à 35°C.

Une solution aqueuse (B) de 15 ml de silicate de sodium à 0,4 M en SiO2 et de rapport molaire "SiO2/Na2O" de 3 a par ailleurs été réalisée. La solution B a été portée à 35°C.

On a alors additionné de manière instantanée la solution (B) dans la solution (A), de façon à obtenir un mélange visuellement transparent de pH égal à 2.

A ce mélange, on a alors additionné de manière instantanée 7,19 ml de la dispersion colloïdale précédemment préparée, ce qui représente 5,95 mmol de lanthane et de fer ajoutées. Le pH du mélange obtenu a été mesuré égal à 5,9.

Ce mélange, tout d'abord limpide, s'est troublé au cours du temps avec la formation d'un précipité. On a laissé l'agitation se poursuivre durant 16 heures à 35°C.

On a ensuite porté le mélange à 80°C pendant 16 heures en enceinte fermée de façon à réaliser un mûrissement en température.

A l'issu de cette étape de mûrissement, on a centrifugé à 4500 tours par minute pendant 15 minutes. On a redispersé le culot de centrifugation obtenu dans 40 ml de solution d'eau déminéralisée et on a à nouveau centrifugé la dispersion obtenue à 4500 tours par minute pendant 15 minutes.

Suite à cette deuxième étape de centrifugation, on a séché le culot de centrifugation obtenu à 60°C pendant 16 heures, puis on l'a laissé refroidir.

On a calciné sous azote le solide obtenu avec une montée en température de 1°C par minute de 20°C à 500°C et on a maintenu la température de 500°C pendant 6 heures à 500°C.

On a laissé refroidir le solide obtenu et on a effectué une nouvelle calcination, sous air cette fois, avec le même profil de température.

Le produit obtenu montre en microscopie électronique à transmission une mésostructure hexagonale.

## Revendications

1. Matériau mésostructuré, thermiquement stable, dont les parois de la mésostructure comprennent :
(a) une matrice minérale ; et
(b) dispersées au sein de cette matrice minérale (a), des particules de dimensions nanométriques à base d'au moins une terre rare T et d'au moins un élément de transition M différent de cette terre rare, dans lesquelles :
(b1) la terre rare T est au moins partiellement sous forme d'un oxyde, hydroxyde et/ou oxyhydroxyde, et l'élément de transition M est au moins partiellement à l'état d'oxydation 0 ;
ou
(b2) la terre rare T et l'élément de transition M sont au moins partiellement présents sous forme d'un oxyde mixte possédant une structure cristalline.

2. Matériau selon la revendication 1, **caractérisé en ce qu'**il présente au moins une structure organisée choisie parmi :
- les mésostructures mésoporeuses de symétrie hexagonale tridimensionnelle P63/mmc, de symétrie hexagonale bidimensionnelle P6mm, de symétrie cubique tridimensionnelle la3d, Im3m ou Pn3m ; ou
- les mésostructures de type vésiculaires, lamellaires ou vermiculaires.

3. Matériau selon la revendication 1 ou la revendication 2, **caractérisé en ce que** l'épaisseur globale des parois de la mésostructure est comprise entre 2 nm et 20 nm.

4. Matériau selon l'une quelconque des revendications 1 à 3, **caractérisé en ce qu'**il s'agit d'un matériau mésoporeux ordonné dans lequel le diamètre moyen des pores est compris entre 2 nm et 30 nm.

5. Matériau selon l'une quelconque des revendications 1 à 4, **caractérisé en ce qu'**il présente une surface spécifique comprise, entre 500 et 3000 m²/cm³.

6. Matériau selon l'une quelconque des revendications 1 à 5, **caractérisé en ce que** la matrice minérale (a) est à base de silice, de zircone, d'alumine et/ou d'oxyde de titane.

7. Matériau selon la revendication 6, **caractérisé en ce que** la matrice minérale (a) est constituée majoritairement de silice.

8. Matériau selon l'une quelconque des revendications 1 à 7, **caractérisé en ce que** les particules (b) sont des particules de morphologie sphérique ou légèrement anisotrope dont au moins 50% de la population possède un diamètre moyen compris entre 2 nm et 25 nm, la répartition granulométrique desdites particules étant monodisperse.

9. Matériau selon l'une quelconque des revendications 1 à 8, **caractérisé en ce qu'**une partie au moins des particules de dimensions nanométriques dispersées au sein de la phase minérale liante est en contact avec les parties poreuses constituant l'espace interne du matériau.

10. Matériau selon l'une quelconque des revendications 1 à 9, **caractérisé en ce que** le rapport volumique particules (b)/phase minérale (a) est compris entre 5 % et 95 %.

11. Matériau selon l'une quelconque des revendications 1 à 10, **caractérisé en ce que** les particules (b) comprennent :
- un oxyde, hydroxyde et/ou oxyhydroxyde de la terre rare T ; et
- l'élément de transition M au moins partiellement à l'état d'oxydation 0.

12. Matériau selon la revendication 11, **caractérisé en ce qu'**au moins une partie de l'élément de transition M présent à l'état d'oxydation 0 est localisé à la périphérie des particules (b).

13. Matériau selon la revendication 11 ou la revendication 12, **caractérisé en ce que** la terre rare T est choisie parmi l'yttrium, le lanthane, le cérium, le praséodyme, le néodyme, le samarium, l'europium, le gadolinium, le terbium, ou le dysprosium.

14. Matériau selon l'une quelconque des revendications 11 à 13, **caractérisé en ce que** l'élément de transition M présent à l'état d'oxydation 0 est choisi parmi le rhodium, le platine, le palladium, le ruthénium, le cobalt, le cuivre, l'argent, le nickel ou le manganèse.

15. Matériau selon l'une quelconque des revendications 11 à 14, **caractérisé en ce que** le rapport molaire (métal M/terre rare T) est compris entre 0,002 et 0,2.

16. Matériau selon l'une quelconque des revendications 1 à 10, **caractérisé en ce que** les particules (b) sont à base d'un oxyde mixte possédant une structure cristalline intégrant des cations de la terre rare T et des cations dudit élément de transition M.

17. Matériau selon la revendication 16, **caractérisé en ce que** l'oxyde mixte présente une structure de type perovskite ou pyrochlore, ou de structure analogue à celle de K₂NiF₄.

18. Matériau selon la revendication 16 ou la revendication 17, **caractérisé en ce que** la terre rare T est choisie parmi l'yttrium, le lanthane, le cérium, le praséodyme, le néodyme, le samarium, l'europium, le gadolinium, le terbium, ou le dysprosium.

19. Matériau selon l'une quelconque des revendications 16 à 18, **caractérisé en ce que** le métal M est choisi parmi le titane, le chrome, le manganèse, le fer, le cobalt, le nickel, le cuivre, le zinc, le zirconium, l'argent, ou une terre rare différente de la terre rare T.

20. Matériau selon l'une quelconque des revendications 16 à 19, **caractérisé en ce que** les particules (b) à base d'oxyde mixte intègrent en outre un élément de transition M', présent à l'état d'oxydation 0.

21. Matériau selon la revendication 20, **caractérisé en ce qu'**au moins une partie de l'élément de transition M' présent à l'état d'oxydation 0 est localisé à la périphérie des particules (b).

22. Matériau selon la revendication 20 ou la revendication 21, **caractérisé en ce que** l'élément de transition M' est choisi parmi le rhodium, le platine, le palladium, ou le ruthénium, l'argent, le cobalt, le cuivre, ou le nickel.

23. Procédé de préparation d'un matériau selon l'une quelconque des revendications 1 à 22, **caractérisé en ce qu'**il comprend les étapes consistant à :
(1) mettre en présence, dans un milieu comprenant un agent texturant :
(i) des particules de dimensions nanométriques comprenant au moins un oxyde, hydroxyde ou oxyhydroxyde de la terre rare T, lesdites particules étant complexées par au moins un sel du métal M ; ou des particules de dimensions nanométriques comprenant au moins un oxyde mixte ou hydroxyde mixte de la terre rare T et du métal M ; et
(ii) un précurseur minéral, susceptible de mener dans ledit milieu, à la formation d'une phase minérale insoluble, dans des conditions adéquates de pH ;
(2) laisser se réaliser, ou, si nécessaire, provoquer par un ajustement du pH, la formation de ladite phase minérale à partir dudit précurseur (ii), ce par quoi on obtient une mésostructure dont les parois sont formées par ladite phase minérale emprisonnant au moins une partie des particules de dimensions nanométriques initialement introduites ;
(3) si nécessaire, soumettre la mésostructure obtenue à l'issu de l'étape (2) à une étape de traitement thermique et/ou à une étape de réduction, conduite(s) le cas échéant de façon à ce que, à l'issu de ce(s) traitement(s), les particules présentes au sein des parois de la mésostructure comprennent des particules répondant à la définition des particules (b) de la revendication 1 ; et
(4) si nécessaire, éliminer l'agent texturant éventuellement présent dans les pores de la mésostructure obtenue à l'issue de ces différentes étapes.

24. Procédé de préparation d'un matériau selon l'une quelconque des revendications 11 à 15, **caractérisé en ce qu'**il comprend les étapes consistant à :
(1) mettre en présence, dans un milieu comprenant un agent texturant :
(i) des particules de dimensions nanométriques comprenant au moins un oxyde, hydroxyde ou oxyhydroxyde de la terre rare T, lesdites particules étant complexées par au moins un sel du métal M ; ou des particules de dimensions nanométriques comprenant un oxyde et/ou hydroxyde mixte de la terre rare T et de l'élément de transition M ; et
(ii) un précurseur minéral, susceptible de mener dans ledit milieu, à la formation d'une phase minérale insoluble, dans des conditions adéquates de pH ;
(2) laisser se réaliser, ou, si nécessaire, provoquer par un ajustement du pH, la formation de ladite phase minérale à partir dudit précurseur (ii), ce par quoi on obtient une mésostructure dont les parois sont formées par ladite phase minérale emprisonnant au moins une partie des particules de dimensions nanométriques initialement introduites ;
(3) soumettre la mésostructure obtenue à l'issu de l'étape (2) à une étape de traitement thermique et de réduction, conduite de façon à former, à partir d'au moins une partie du sel du métal M, du métal M à l'état d'oxydation 0 ; et
(4) si nécessaire, éliminer l'agent texturant éventuellement présent dans les pores de la mésostructure obtenue à l'issue de ces différentes étapes.

25. Procédé de préparation d'un matériau selon l'une quelconque des revendications 16 à 19, **caractérisé en ce qu'**il comprend les étapes consistant à :
(1) mettre en présence, dans un milieu comprenant un agent texturant :
(i) des particules de dimensions nanométriques comprenant au moins un oxyde mixte ou hydroxyde mixte de la terre rare T et du métal M ; et
(ii) un précurseur minéral, susceptible de mener dans ledit milieu, à la formation d'une phase minérale insoluble, dans des conditions adéquates de pH ;
(2) laisser se réaliser, ou, si nécessaire, provoquer par un ajustement du pH, la formation de ladite phase minérale à partir dudit précurseur (ii), ce par quoi on obtient une mésostructure dont les parois sont formées par ladite phase minérale emprisonnant au moins une partie des particules de dimensions nanométriques initialement introduites ;
(3) si nécessaire, soumettre la mésostructure obtenue à l'issu de l'étape (2) à une étape de traitement thermique, conduite le cas échéant de façon à ce que, à l'issu de ce traitement, les particules présentes au sein des parois de la mésostructure comprennent un oxyde mixte de structure cristalline répondant à la définition (b1) de la revendication 1 ; et
(4) si nécessaire, éliminer l'agent texturant éventuellement présent dans les pores de la mésostructure obtenue à l'issue de ces différentes étapes.

26. Procédé de préparation d'un matériau selon l'une quelconque des revendications 20 à 22, **caractérisé en ce qu'**il comprend les étapes consistant à :
(1) mettre en présence, dans un milieu comprenant un agent texturant :
(i) des particules de dimensions nanométriques comprenant au moins un oxyde mixte ou hydroxyde mixte de la terre rare T et du métal M, lesdites particules étant complexées par au moins un sel du métal M' ; et
(ii) un précurseur minéral, susceptible de mener dans ledit milieu, à la formation d'une phase minérale insoluble, dans des conditions adéquates de pH ;
(2) laisser se réaliser, ou, si nécessaire, provoquer par un ajustement du pH, la formation de ladite phase minérale à partir dudit précurseur (ii), ce par quoi on obtient une mésostructure dont les parois sont formées par ladite phase minérale emprisonnant au moins une partie des particules de dimensions nanométriques initialement introduites ;
(3) soumettre la mésostructure obtenue à l'issu de l'étape (2) à une étape de traitement thermique et de réduction, conduite de façon à ce que, à l'issu de ce traitement, les particules présentes au sein des parois de la mésostructure comprennent un oxyde mixte de structure cristalline répondant à la définition (b1) de la revendication 1, et au moins une partie du métal M' à l'état d'oxydation 0 ; et
(4) si nécessaire, éliminer l'agent texturant éventuellement présent dans les pores de la mésostructure obtenue à l'issue de ces différentes étapes.

27. Procédé selon l'une quelconque des revendications 23 à 26, **caractérisé en ce que** le milieu mis en oeuvre est un milieu aqueux.

28. Procédé selon l'une quelconque des revendications 23 à 27, **caractérisé en ce que** l'agent texturant mis en oeuvre est un agent amphiphile non ionique de type copolymère séquencé, choisi parmi les copolymères tribloc poly(oxyde d'éthylène)-poly(oxyde de propylène)-poly(oxyde d'éthylène) ou les poly(oxyde d'éthylène) greffés.

29. Procédé selon l'une quelconque des revendications 23 à 28, **caractérisé en ce que** le rapport molaire (agent texturant) / (cations métalliques présents dans les particules (i) + précurseur minéral (ii) ) est généralement compris entre 0,05 et 3.

30. Procédé selon l'une quelconque des revendications 23 à 29, **caractérisé en ce que** les particules (i) sont introduites sous forme d'une dispersion colloïdale au sein de laquelle les particules possèdent, pour au moins 50% de leur population, un diamètre moyen compris entre 1 nm et 25 nm.

31. Procédé selon l'une quelconque des revendications 23 à 30, **caractérisé en ce que** le précurseur minéral (ii) est un silicate alcalin, de préférence le silicate de sodium.

32. Procédé selon l'une quelconque des revendications 23 à 31 **caractérisé en ce que** le processus de texturation est conduit à une température comprise entre 15°C et 90°C.

33. Procédé selon l'une quelconque des revendications 23 à 32, **caractérisé en ce que** l'étape de formation de la phase minérale à partir du précurseur minéral comprend une étape de mûrissement conduite à une température comprise entre 15°C et 85°C.

34. Procédé selon l'une quelconque des revendications 23 à 33, **caractérisé en ce que** le solide mesostructuré obtenu à l'issue des étapes (1), (2) et éventuellement (3) et/ou (4) est soumis à un traitement thermique ultérieur, notamment à une calcination.

35. Procédé selon l'une quelconque des revendications 23 à 24, **caractérisé en ce que**, postérieurement à l'élimination de l'agent texturant, on réalise une attaque chimique partielle de la phase minéraie.

36. Utilisation d'un matériau selon l'une quelconque des revendications 1 à 22, ou d'un matériau susceptible d'être obtenu par le procédé de l'une quelconque des revendications 23 à 35, à titre de catalyseur hétérogène de dénitrification de gaz de combustion, à titre de catalyseur de raffinage d'une coupe pétrolière, à titre de catalyseur d'une réaction d'oxydation, à titre de catalyseur de trans-estérification, ou à titre de charge pour réaliser le renfort d'une matrice polymère ou d'un film.

## Patentansprüche

1. Mesostrukturiertes thermostabiles Material, dessen Wände der Mesostruktur umfassen:
(a) eine mineralische Matrix, und
(b) dispergiert innerhalb dieser mineralischen Matrix (a), Teilchen mit Nanometerdimensionen auf der Basis von wenigstens einer Seltenerde T und wenigstens einem Übergangselement M, das von der Seltenerde verschieden ist, worin:
(b1) die Seltenerde T wenigstens teilweise in Form eines Oxids, Hydroxids oder Oxyhydroxids vorliegt, und das Übergangselement M wenigstens teilweise im Oxidationszustand 0 vorliegt,
oder
(b2) die Seltenerde T und das Übergangselement M wenigstens teilweise in Form eines gemischten Oxids mit kristalliner Struktur vorliegen.

2. Material gemäß Anspruch 1, **dadurch gekennzeichnet, dass** es wenigstens eine organisierte Struktur aufweist, gewählt aus:
- mesoporösen Mesostrukturen mit hexagonaler dreidimensionaler Struktur P63/mmc, mit hexagonaler zweidimensionaler Symmetrie P₆ mm, mit kubischer dreidimensionaler Symmetrie la3d, Im3m oder Pn3m; oder
- Mesostrukturen vom Vesikel-, Lamellen- oder Vermicular-Typ.

3. Material gemäß Anspruch 1 oder Anspruch 2, **dadurch gekennzeichnet, dass** die Gesamtdicke der Wände der Mesostruktur zwischen 2 nm und 20 nm liegt.

4. Material gemäß einem der Ansprüche 1 bis 3, **dadurch gekennzeichnet, dass** es sich um ein geordnetes mesoporöses Material handelt, in dem der mittlere Durchmesser der Poren zwischen 2 nm und 30 nm liegt.

5. Material gemäß einem der Ansprüche 1 bis 4, **dadurch gekennzeichnet, dass** es eine spezifische Oberfläche aufweist, die zwischen 500 und 3000 m²/cm³ liegt.

6. Material gemäß einem der Ansprüche 1 bis 5, **dadurch gekennzeichnet, dass** die mineralische Matrix (a) auf der Basis von Siliciumoxid, Zirkonoxid, Aluminiumoxid und/oder Titanoxid ist.

7. Material gemäß dem Anspruch 6, **dadurch gekennzeichnet, dass** die mineralische Matrix (a) hauptsächlich aus Siliciumoxid zusammengesetzt ist.

8. Material gemäß einem der Ansprüche 1 bis 7, **dadurch gekennzeichnet, dass** es sich bei den Teilchen (b) um Teilchen mit einer sphärischen oder leicht anisotropen Morphologie handelt, von denen wenigstens 50 % der Population einen mittleren Durchmesser aufweisen, der zwischen 2 nm und 25 nm liegt, wobei die granulometrische Verteilung der Teilchen monodispers ist.

9. Material gemäß einem der Ansprüche 1 bis 8, **dadurch gekennzeichnet, dass** ein Teil wenigstens der Teilchen mit Nanometerdimensionen, die innerhalb der verbindenden mineralischen Phase dispergiert sind, in Kontakt mit den porösen Teilen ist, die den Innenraum des Materials ausmachen.

10. Material gemäß einem der Ansprüche 1 bis 9, **dadurch gekennzeichnet, dass** das Volumenverhältnis von Teilchen (b)/mineratische Phase (a) zwischen 5 % und 95 % liegt.

11. Material gemäß einem der Ansprüche 1 bis 10, **dadurch gekennzeichnet, dass** die Teilchen (b) umfassen:
- ein Oxid, Hydroxid und/oder Oxyhydroxid der Seltenerde T; und
- das Übergangselement M zumindest teilweise im Oxidationszustand 0.

12. Material gemäß dem Anspruch 11, **dadurch gekennzeichnet, dass** wenigstens ein Teil des Übergangselements M, das im Oxidationszustand 0 vorliegt, an der Peripherie der Teilchen (b) lokalisiert ist.

13. Material gemäß dem Anspruch 11 oder dem Anspruch 12, **dadurch gekennzeichnet, dass** die Seltenerde T aus Yttrium, Lanthan, Cer, Praseodym, Neodym, Samarium, Europium, Gadolinium, Terbium oder Dysprosium gewählt ist.

14. Material gemäß einem der Ansprüche 11 bis 13, **dadurch gekennzeichnet, dass** das Übergangselement M, das im Oxidationszustand 0 vorliegt, aus Rhodium, Platin, Palladium, Ruthenium, Cobalt, Kupfer, Silber, Nickel oder Mangan ausgewählt ist.

15. Material gemäß einem der Ansprüche 11 bis 14, **dadurch gekennzeichnet, dass** das Molverhältnis (Metall M/Seltenerde T) zwischen 0,002 und 0,2 liegt.

16. Material gemäß einem der Ansprüche 1 bis 10, **dadurch gekennzeichnet, dass** die Teilchen (b) auf der Basis eines gemischten Oxids sind, das eine kristalline Struktur aufweist, die die Kationen der Seltenerde T und die Kationen des Übergangselements M integriert.

17. Material gemäß dem Anspruch 16, **dadurch gekennzeichnet, dass** das gemischte Oxid eine Struktur vom Perovskit- oder Pyrochlor-Typ oder eine analoge Struktur zu jener von K₂NiF₄ aufweist.

18. Material gemäß dem Anspruch 16 oder dem Anspruch 17, **dadurch gekennzeichnet, dass** die Seltenerde T aus Yttrium, Lanthan, Cer, Praseodym, Neodym, Samarium, Europium, Gadolinium, Terbium oder Dysprosium gewählt ist.

19. Material gemäß einem der Ansprüche 16 bis 18, **dadurch gekennzeichnet, dass** das Metall M aus Titan, Chrom, Mangan, Eisen, Cobalt, Nickel, Kupfer, Zink, Zirkonium, Silber oder einer Seltenerde, die von der Seltenerde T verschieden ist, ausgewählt ist.

20. Material gemäß einem der Ansprüche 16 bis 19, **dadurch gekennzeichnet, dass** die Teilchen (b) auf der Basis eines gemischten Oxids ferner ein Übergangselement M', das im Oxidationszustand 0 vorliegt, integrieren.

21. Material gemäß dem Anspruch 20, **dadurch gekennzeichnet, dass** wenigstens ein Teil des Übergangselements M', das im Oxidationszustand 0 vorliegt, an der Peripherie der Teilchen (b) lokalisiert ist.

22. Material gemäß Anspruch 20 oder Anspruch 21, **dadurch gekennzeichnet, dass** das Übergangselement M' aus Rhodium, Platin, Palladium, Ruthenium, Silber, Cobalt, Kupfer oder Nickel gewählt ist.

23. Verfahren zur Herstellung eines Materials gemäß einem der Ansprüche 1 bis 22, **dadurch gekennzeichnet, dass** es die folgenden Schritte umfasst:
(1) Zugeben, in ein Medium, das einen Strukturfestiger enthält, von
(i) Teilchen mit Nanometerdimensionen umfassend wenigstens ein Oxid, Hydroxid oder Oxyhydroxid der Seltenerde T, wobei die Teilchen durch wenigstens ein Salz des Metalls M komplexiert sind; oder Teilchen mit Nanometerdimensionen, die wenigstens ein gemischtes Oxid oder gemischtes Hydroxid der Seltenerde T und des Metalls M umfassen; und
(ii) einem mineralischen Vorläufer, der fähig ist, in dem Medium zur Bildung einer unlöslichen mineralischen Phase zu führen, unter geeigneten pH-Bedingungen;
(2) Verwirklichen lassen, oder erforderlichenfalls durch eine pH-Einstellung Hervorrufen, der Bildung der mineralischen Phase ausgehend vom Vorläufer (ii), wodurch eine Mesostruktur erhalten wird, deren Wände aus der mineralischen Phase gebildet sind, die wenigstens einen Teil der anfänglich eingeführten Teilchen mit Nanometerdimensionen einschließen;
(3) erforderlichenfalls Unterwerfen der am Ende von Schritt (2) erhaltenen Mesostruktur einem Wärmebehandlungsschritt und/oder einem Reduktionsschritt, der bzw. die gegebenenfalls derart durchgeführt wird bzw. werden, dass am Ende dieser Behandlung(en) die Teilchen, die innerhalb der Wände der Mesostruktur vorliegen, Teilchen umfassen, die der Definition der Teilchen (b) gemäß Anspruch 1 entsprechen; und
(4) erforderlichenfalls Entfernen des Strukturfestigers, der möglicherweise in den Poren der Mesostruktur, die am Ende dieser verschiedenen Schritte erhalten wird, vorhanden ist.

24. Verfahren zur Herstellung eines Materials gemäß einem der Ansprüche 11 bis 15, **dadurch gekennzeichnet, dass** es die folgenden Schritte umfasst:
(1) Zugeben, in ein Medium, das einen Strukturfestiger enthält, von
(i) Teilchen mit Nanometerdimensionen umfassend wenigstens ein Oxid, Hydroxid oder Oxyhydroxid der Seltenerde T, wobei die Teilchen durch wenigstens ein Salz des Metalls M komplexiert sind; oder Teilchen mit Nanometerdimensionen, die wenigstens ein gemischtes Oxid und/oder Hydroxid der Seltenerde T und des Übergangselements M umfassen; und
(ii) einem mineralischen Vorläufer, der fähig ist, in dem Medium zur Bildung einer unlöslichen mineralischen Phase zu führen, unter geeigneten pH-Bedingungen;
(2) Verwirklichen lassen, oder erforderlichenfalls durch eine pH-Einsteltung Hervorrufen, der Bildung der mineralischen Phase ausgehend vom Vorläufer (ii), wodurch eine Mesostruktur erhalten wird, deren Wände aus der mineralischen Phase gebildet sind, die wenigstens einen Teil der anfänglich eingeführten Teilchen mit Nanometerdimensionen einschließen;
(3) Unterwerfen der am Ende von Schritt (2) erhaltenen Mesostruktur einem Wärmebehandlungs- und Reduktionsschritt, der derart durchgeführt wird, dass ausgehend von wenigstens einem Teil des Salzes des Metalls M das Metall M im Oxidationszustand 0 gebildet wird; und
(4) erforderlichenfalls Entfernen des Strukturfestigers, der möglicherweise in den Poren der Mesostruktur, die am Ende dieser verschiedenen Schritte erhalten wird, vorhanden ist.

25. Verfahren zur Herstellung eines Materials gemäß einem der Ansprüche 16 bis 19, **dadurch gekennzeichnet, dass** es die folgenden Schritte umfasst:
(1) Zugeben, in ein Medium, das einen Strukturfestiger enthält, von
(i) Teilchen mit Nanometerdimensionen umfassend wenigstens ein gemischtes Oxid oder ein gemischtes Hydroxid der Seltenerde T und des Metalls M; und
(ii) einem mineralischen Vorläufer, der fähig ist, in dem Medium zur Bildung einer unlöslichen mineralischen Phase zu führen, unter geeigneten pH-Bedingungen;
(2) Verwirklichen lassen, oder erforderlichenfalls durch eine pH-Einstellung Hervorrufen, der Bildung der mineralischen Phase ausgehend vom Vorläufer (ii), wodurch eine Mesostruktur erhalten wird, deren Wände aus der mineralischen Phase gebildet sind, die wenigstens einen Teil der anfänglich eingeführten Teilchen mit Nanometerdimensionen einschließen;
(3) erforderlichenfalls Unterwerfen der am Ende von Schritt (2) erhaltenen Mesostruktur einem Wärmebehandlungsschritt, der gegebenenfalls derart durchgeführt wird, dass am Ende dieser Behandlung die Teilchen, die innerhalb der Wände der Mesostruktur vorliegen, ein gemischtes Oxid mit kristalliner Struktur umfassen, das der Definition (b1) gemäß Anspruch 1 entspricht; und
(4) erforderlichenfalls Entfernen des Strukturfestigers, der möglicherweise in den Poren der Mesostruktur, die am Ende dieser verschiedenen Schritte erhalten wird, vorhanden ist.

26. Verfahren zur Herstellung eines Materials gemäß einem der Ansprüche 20 bis 22, **dadurch gekennzeichnet, dass** es die folgenden Schritte umfasst:
(1) Zugeben, in ein Medium, das einen Strukturfestiger enthält, von
(i) Teilchen mit Nanometerdimensionen umfassend wenigstens ein gemischtes Oxid oder ein gemischtes Hydroxid der Seltenerde T und des Metalls M, wobei die Teilchen durch wenigstens ein Salz des Metalls M' komplexiert sind; und
(ii) einem mineralischen Vorläufer, der fähig ist, in dem Medium zur Bildung einer unlöslichen mineralischen Phase zu führen, unter geeigneten pH-Bedingungen;
(2) Verwirklichen lassen, oder erforderlichenfalls durch eine pH-Einstellung Hervorrufen, der Bildung der mineralischen Phase ausgehend vom Vorläufer (ii), wodurch eine Mesostruktur erhalten wird, deren Wände aus der mineralischen Phase gebildet sind, die wenigstens einen Teil der anfänglich eingeführten Teilchen mit Nanometerdimensionen einschließen;
(3) Unterwerfen der am Ende von Schritt (2) erhaltenen Mesostruktur einem Wärmebehandlungs- und Reduktionsschritt, der derart durchgeführt wird, dass am Ende dieser Behandlung die Teilchen, die innerhalb der Wände der Mesostruktur vorliegen, ein gemischtes Oxid mit kristalliner Struktur, das der Definition (b1) gemäß Anspruch 1 entspricht, und wenigstens einen Teil des Metalls M' im Oxidationszustand O umfassen; und
(4) erforderlichenfalls Entfernen des Strukturfestigers, der möglicherweise in den Poren der Mesostruktur, die am Ende dieser verschiedenen Schritte erhalten wird, vorhanden ist.

27. Verfahren gemäß einem der Ansprüche 23 bis 26, **dadurch gekennzeichnet, dass** das verwendete Medium ein wässriges Medium ist.

28. Verfahren gemäß einem der Ansprüche 23 bis 27, **dadurch gekennzeichnet, dass** der verwendete Strukturfestiger ein nicht-ionisches amphiphiles Mittel vom Typ sequenziertes Copolymer ist, gewählt aus Poly(ethylenoxid)-Poly(propylenoxid)-Poly(ethylenoxid)-Triblockcopolymeren oder gepfropften Poly(ethylenoxiden).

29. Verfahren gemäß einem der Ansprüche 23 bis 28, **dadurch gekennzeichnet, dass** das Molverhältnis (Strukturfestiger)/(metallische Kationen, die in den Teilchen (i) + mineralischer Vorläufer (ii) vorliegen) im allgemeinen zwischen 0,05 und 3 liegt.

30. Verfahren gemäß einem der Ansprüche 23 bis 29, **dadurch gekennzeichnet, dass** die Teilchen (i) in Form einer kolloidalen Dispersion eingeführt werden, innerhalb derer die Teilchen, zumindest 50 % ihrer Population, einen mittleren Durchmesser aufweisen, der zwischen 1 nm und 25 nm liegt.

31. Verfahren gemäß einem der Ansprüche 23 bis 30, **dadurch gekennzeichnet, dass** der mineralische Vorläufer (ii) ein Alkalisilicat ist, vorzugsweise Natriumsilicat.

32. Verfahren gemäß einem der Ansprüche 23 bis 31, **dadurch gekennzeichnet, dass** der Strukturverfestigungsvorgang bei einer Temperatur zwischen 15°C und 90°C vorgenommen wird.

33. Verfahren gemäß einem der Ansprüche 23 bis 32, **dadurch gekennzeichnet, dass** der Schritt der Bildung der mineralischen Phase ausgehend vom mineralischen Vorläufer einen Reifungsschritt umfasst, der bei einer Temperatur durchgeführt wird, die zwischen 15°C und 85°C liegt.

34. Verfahren gemäß einem der Ansprüche 23 bis 33, **dadurch gekennzeichnet, dass** der mesostrukturierte Feststoff, der am Ende der Schritte (1), (2) und gegebenenfalls (3) und/oder (4) erhalten wird, einer nachträglichen Wärmebehandlung unterworfen wird, insbesondere einer Kalzinierung.

35. Verfahren gemäß einem der Ansprüche 23 bis 24, **dadurch gekennzeichnet, dass** nach der Eliminierung des Strukturfestigers ein partieller chemischer Angriff der mineralischen Phase durchgeführt wird.

36. Verwendung eines Materials gemäß einem der Ansprüche 1 bis 22, oder eines Materials, das nach einem Verfahren gemäß einem der Ansprüche 23 bis 35 erhalten werden kann, als heterogenen Katalysator für die Denitrifizierung von Verbrennungsgasen, als Katalysator für die Erdölraffination, als Katalysator für eine Oxidationsreaktion, als Katalysator für Umesterungen oder als Füllstoff zum Erzielen einer Verstärkung einer Polymermatrix oder eines Films.

## Claims

1. A thermally stable mesostructured material, the walls of the mesostructure of which comprise:
(a) a mineral matrix; and
(b) dispersed within this mineral matrix (a), nanoscale particles based on at least one rare earth E and on at least one transition element M different from this rare earth, in which particles:
(b1) the rare earth E is at least partly in the form of an oxide, hydroxide and/or oxyhydroxide, the transition element M then being at least partly in the oxidation state 0;
or
(b2) the rare earth E and the transition element M are at least partly present in the form of a hybrid oxide possessing a crystal structure.

2. The material as claimed in claim 1, **characterized in that** it has at least one organized structure chosen from:
- mesoporous mesostructures of P63/mmc three-dimensional hexagonal symmetry P6mm, two-dimensional hexagonal symmetry or Ia3d, Im3m or Pn3m three-dimensional cubic symmetry; or
- mesostructures of the vesicular, lamellar or vermicular type.

3. Material according to Claim 1 or Claim 2, **characterized in that** the overall wall thickness of the mesostructure is between 2 nm and 20 nm.

4. Material according to any one of Claims 1 to 3, **characterized in that** it is an ordered mesoporous material in which the mean pore diameter is between 2 nm and 30 nm.

5. Material according to any one of Claims 1 to 4, **characterized in that** it has a specific surface area of between 500 and 3000 m²/cm³.

6. Material according to any one of Claims 1 to 5, **characterized in that** the inorganic matrix (a) is based on silica, zirconia, alumina and/or titanium oxide.

7. Material according to Claim 6, **characterized in that** the inorganic matrix (a) consists predominantly of silica.

8. Material according to any one of Claims 1 to 7, **characterized in that** the particles (b) are particles of spherical or slightly anisotropic morphology, at least 50% of the population of which possesses a mean diameter of between 2 nm and 25 nm, the size distribution of said particles being monodisperse.

9. Material according to any one of Claims 1 to 8, **characterized in that** at least some of the nanoscale particles dispersed within the binding inorganic phase are in contact with the porous parts constituting the internal space of the material.

10. Material according to any one of Claims 1 to 9, **characterized in that** the particles (b)/inorganic phase (a) volume ratio is between 5% and 95%.

11. Material according to any one of Claims 1 to 10, **characterized in that** the particles (b) comprise:
- an oxide, hydroxide and/or oxyhydroxide of the rare earth E; and
- the transition element M at least partly in the oxidation state 0.

12. Material according to Claim 11, **characterized in that** at least some of the transition element M present in the oxidation state 0 is localized on the periphery of the particles (b).

13. Material according to Claim 11 or Claim 12, **characterized in that** the rare earth E is chosen from yttrium, lanthanum, cerium, praseodymium, neodymium, samarium, europium, gadolinium, terbium and dysprosium.

14. Material according to any one of Claims 11 to 13, **characterized in that** the transition element M present in the oxidation state 0 is chosen from rhodium, platinum, palladium, ruthenium, cobalt, copper, silver, nickel and manganese.

15. Material according to any one of Claims 11 to 14, **characterized in that** the metal M/rare earth E molar ratio is between 0.002 and 0.2.

16. Material according to any one of Claims 1 to 10, **characterized in that** the particles (b) are based on a mixed oxide possessing a crystal structure incorporating cations of the rare earth E and cations of said transition element M.

17. Material according to Claim 16, **characterized in that** the mixed oxide has a structure of the perovskite or pyrochlore type, or a structure analogous to that of K₂NiF₄.

18. Material according to Claim 16 or Claim 17, **characterized in that** the rare earth E is chosen from yttrium, lanthanum, cerium, praseodymium, neodymium, samarium, europium, gadolinium, terbium and dysprosium.

19. Material according to any one of Claims 16 to 18, **characterized in that** the metal M is chosen from titanium, chromium, manganese, iron, cobalt, nickel, copper, zinc, zirconium, silver or a rare earth different from the rare earth E.

20. Material according to any one of Claims 16 to 19, **characterized in that** the particles (b) based on a mixed oxide furthermore incorporate a transition element M' present in the oxidation state 0.

21. Material according to Claim 20, **characterized in that** at least part of the transition element M' present in the oxidation state 0 is localized on the periphery of the particles (b).

22. Material according to Claim 20 or Claim 21, **characterized in that** the transition element M' is chosen from rhodium, platinum, palladium or ruthenium, silver, cobalt, copper or nickel.

23. Process for preparing a material according to any one of Claims 1 to 22, **characterized in that** it comprises the steps consisting in:
(1) bringing together, in a medium comprising a templating agent:
(i) nanoscale particles comprising at least one oxide, hydroxide or oxyhydroxide of the rare earth E, said particles being complexed by at least one salt of the metal M; or nanoscale particles comprising at least one mixed oxide or mixed hydroxide of the rare earth E and of the metal M; and
(ii) a inorganic precursor, capable of leading, in said medium, to the formation of an insoluble inorganic phase under suitable pH conditions;
(2) leaving said inorganic phase to form from said precursor (ii), or if necessary making said inorganic phase form by adjusting the pH, whereby a mesostructure whose walls are formed from said inorganic phase trapping at least some of the initially introduced nanoscale particles is obtained;
(3) if necessary, subjecting the mesostructure obtained from step (2) to a heat treatment step and/or to a reduction step, this or these steps being carried out, as the case may be, so that, after this or these treatments, the particles present within the walls of the mesostrucrure comprise particles meeting the definition of the particles (b) of Claim 1; and
(4) if necessary, removing the templating agent optionally present in the pores of the mesostructure obtained from these various steps.

24. Process for preparing a material according to any one of Claims 11 to 15, **characterized in that** it comprises the steps consisting in:
(1) bringing together, in a medium comprising a templating agent:
(i) nanoscale particles comprising at least one oxide, hydroxide or oxyhydroxide of the rare earth E, said particles being complexed by at least one salt of the metal M; or nanoscale particles comprising one mixed oxide and/or mixed hydroxide of the rare earth E and of the transition element M; and
(ii) a inorganic precursor, capable of leading, in said medium, to the formation of an insoluble inorganic phase under suitable pH conditions;
(2) leaving said inorganic phase to form from said precursor (ii), or if necessary making said inorganic phase form by adjusting the pH, whereby a mesostructure whose walls are formed from said inorganic phase trapping at least some of the initially introduced nanoscale particles is obtained;
(3) subjecting the mesostructure obtained from step (2) to a heat treatment and reduction step carried out so as to form the metal M in the oxidation state 0 from at least some of the salt of the metal M; and
(4) if necessary, removing the templating agent optionally present in the pores of the mesostructure obtained from these various steps.

25. Process for preparing a material according to any one of Claims 16 to 19, **characterized in that** it comprises the steps consisting in:
(1) bringing together, in a medium comprising a templating agent:
(i) nanoscale particles comprising at least one mixed oxide or mixed hydroxide of the rare earth E and of the metal M; and
(ii) a inorganic precursor, capable of leading, in said medium, to the formation of an insoluble inorganic phase under suitable pH conditions;
(2) leaving said inorganic phase to form from said precursor (ii), or if necessary making said inorganic phase form by adjusting the pH, whereby a mesostructure whose walls are formed from said inorganic phase trapping at least some of the initially introduced nanoscale particles is obtained;
(3) if necessary, subjecting the mesostructure obtained from step (2) to a heat treatment step carried out, where appropriate, so that, after this treatment, the particles present within the walls of the mesostructure comprise a mixed oxide of crystal structure meeting the definition (b1) cf Claim 1; and
(4) if necessary, removing the templating agent optionally present in the pores of the mesostructure obtained from these various steps.

26. Process for preparing a material according to any one of Claims 20 to 22, **characterized in that** it comprises the steps consisting in:
(1) bringing together, in a medium containing a templating agent:
(i) nanoscale particles comprising at least one mixed oxide or mixed hydroxide of the rare earth E and of the metal M, said particles being complexed by at least one salt of the metal M'; and
(ii) a inorganic precursor, capable of leading, in said medium, to the formation of an insoluble inorganic phase under suitable pH conditions;
(2) leaving said inorganic phase to form from said precursor (ii), or if necessary making said inorganic phase form by adjusting the pH, whereby a mesostructure whose walls are formed from said inorganic phase trapping at least some of the initially introduced nanoscale particles is obtained;
(3) subjecting the mesostructure obtained from step (2) to a heat treatment and reduction step carried out so that, after this treatment, the particles present within the walls of the mesostructure comprise a mixed oxide of crystal structure meeting the definition (b1) of Claim 1, and at least some of the metal M' in the oxidation state 0; and
(4) if necessary, removing the templating agent optionally present in the pores of the mesostructure obtained from these various steps.

27. Process according to any one of Claims 23 to 26, **characterized in that** the medium employed is an aqueous medium.

28. Process according to any one of Claims 23 to 27, **characterized in that** the templating agent used is a nonionic amphiphilic agent of the block copolymer type, chosen from grafted polyethylene oxides or poly(ethylene oxide)/poly(propylene oxide)/poly(ethylene oxide) triblock copolymers.

29. Process according to any one of Claims 23 to 28, **characterized in that** the (templating agent)/(metal cations present in the particles (i) + inorganic precursor (ii)) molar ratio is generally between 0.05 and 3.

30. Process according to any one of Claims 23 to 29, **characterized in that** the particles (i) are introduced in the form of a colloidal dispersion within which the particles possess, for at least 50% of their population, a mean diameter of between 1 nm and 25 nm.

31. Process according to any one of Claims 23 to 30, **characterized in that** the inorganic precursor (ii) is an alkali metal silicate, preferably sodium silicate.

32. Process according to any one of Claims 23 to 31, **characterized in that** the templating procedure is carried out at a temperature of between 15°C and 90°C.

33. Process according to any one of Claims 23 to 32, **characterized in that** the step for forming the inorganic phase from the inorganic precursor comprises a maturing step carried out at a temperature of between 15°C and 85°C.

34. Process according to any one of Claims 23 to 33, **characterized in that** the mesostructured solid obtained after steps (1), (2) and optionally (3) and/or (4) is subjected to a subsequent heat treatment, especially to a calcining treatment.

35. Process according to either of Claims 23 and 24, **characterized in that**, subsequent to the templating agent elimination, a partial chemical etching of the inorganic phase is carried out.

36. Use of a material according to any one of Claims 1 to 22, or of a material that can be obtained by the process according to any one of Claims 23 to 35, as heterogeneous catalyst for the denitrification of combustion gas, as catalyst for refining a petroleum cut, as catalyst for an oxidation reaction, as a transesterificaticn catalyst or as a filler for reinforcing a polymer matrix or a film.
